# EUROPÄISCHE PATENTSCHRIFT

(11) **EP 3 007 796 B1**
(45) Veröffentlichungstag und Bekanntmachung des Hinweises auf die Patenterteilung: **04.09.2019**
(21) Anmeldenummer: 14742582.1
(22) Anmeldetag: 11.06.2014
(51) Int. Cl.: B01D 29/23, B01D 29/68, B01D 29/94

(54) **RÜCKSPÜLFILTER**
BACKFLUSHING FILTER
FILTRE À RÉTROLAVAGE

(30) Priorität: 11.06.2013 DE 202013102503 U
(43) Veröffentlichungstag der Anmeldung: 20.04.2016
(73) Patentinhaber: Boll & Kirch Filterbau GmbH, 50170 Kerpen (DE)
(72) Erfinder: CARTARIUS, Karsten, 52391 Vettweiß (DE); FINSEL, Andreas, 50858 Köln (DE); ROTT, Willi, 53332 Bornheim (DE)
(74) Vertreter: Althaus, Arndt
(86) Internationale Anmeldenummer: PCT/IB2014/062142
(87) Internationale Veröffentlichungsnummer: WO 2014/199321

(56) Entgegenhaltungen:
- DE-C2- 3 235 552
- DE-U1-202011 000 268

## Beschreibung

Die Erfindung betrifft einen Rückspülfilter für flüssige Medien, insbesondere für flüssige Brennstoffe, mit einem einen Filtereinlass, einen Filterauslass und einen Spülanschluss aufweisenden Filtergehäuse, mit einem im Filtergehäuse feststehend angeordneten, von dem zu filternden Medium von innen nach außen durchströmten Filtereinsatz, der mittels wenigstens eines, mindestens zwei Gruppen von schlitzartigen Fenstern aufweisenden Stützkäfigs und mindestens eines am Stützkäfig abgestützten Filtermittels gebildet ist, wobei die Fenster innerhalb jeder Gruppe zueinander parallel ausgerichtet verlaufen und durch zueinander parallele Stege des Stützkäfigs voneinander getrennt sind, und mit einer im Inneren des Filtereinsatzes angeordneten, mittels eines Verstellantriebs im Filtereinsatz um eine Filterlängsachse rotierbaren, mindestens eine Spaltöffnung aufweisenden und sich über die Höhe des Filtereinsatzes erstreckenden Rückspülvorrichtung zum zonenweisen Freispülen des Filtermittels über Spaltöffnung sowie Fenster und zum Abführen von Filterrückständen zum Spülanschluss während eines Rückspülzyklus, wobei die schlitzartigen Fenster der einen Gruppe versetzt gegenüber denjenigen der anderen Gruppe(n) angeordnet sind und die Fenster der einen Gruppe mit den Stegen der anderen Gruppe(n) in einer gemeinsamen Ebene liegen. Die Erfindung betrifft ferner auch einen Filtereinsatz für einen Rückspülfilter, mit einem Stützkäfig zum Abstützen eines Filtermittels, wobei der Stützkäfig mindestens zwei Gruppen von schlitzartigen Fenstern aufweist, die innerhalb jeder Gruppe zueinander parallel ausgerichtet verlaufen und durch zueinander parallele Stege des Stützkäfigs voneinander getrennt sind, wobei die schlitzartigen Fenster der einen Gruppe versetzt gegenüber denjenigen der anderen Gruppe(n) angeordnet sind und die Fenster der einen Gruppe mit den Stegen der anderen Gruppe in einer gemeinsamen Ebene liegen.

Die Erfindung geht aus von einem Rückspülfilter gemäß der DE 32 35 552 C2. Die genannte Entgegenhaltung beschreibt bereits den grundsätzlichen Aufbau eines Rückspülfilters mit einem Filtereinsatz, der einen Stützkäfig mit gruppenweise angeordneten Fenstern aufweist, die versetzt zueinander angeordnet sind. Die DE 32 35 552 C2 beschreibt hierbei eine erste Ausgestaltung, bei welcher sich sämtliche rechteckförmigen Fenster mit ihrer längeren Seite in Umfangsrichtung des Filtereinsatzes beziehungsweise in einer Ebene erstrecken, die senkrecht auf die Filtereinsatzachse steht, und bei welcher die Rückspülvorrichtung als zylindrischer Spülteller ausgebildet ist, der mit einer Schubstange innerhalb des Filtereinsatzes hoch- und herunterbewegt werden kann. Bei einer zweiten Ausgestaltung sind die einzelnen Fenster axial ausgerichtet, d.h. die Längsseite der rechteckförmigen Fenster erstreckt sich parallel zur Längsachse des Filtereinsatzes, und die Spülvorrichtung besteht aus einem rotierbaren Spülarm. Um bei der zuletzt genannten Ausgestaltung mit axial ausgerichteten Fenstern das Filtermittel hinter den unterschiedlichen Fenstergruppen durch Rückspülung zu reinigen, weist der Spülarm mehrere Spaltöffnungen auf, denen jeweils ein eigenes Absperrventil zugeordnet ist, wobei die Absperrventile wechselweise gesteuert werden, damit jeweils einer der Spülkanäle gegenüber dem Spülanschluss gesperrt ist.

Aufgabe der Erfindung ist es, die Konstruktion des gattungsgemäßen Rückspülfilters zu vereinfachen und im Rückspülzyklus die Rückspülintensität am Filtermittel zu verbessern, insbesondere wenn die zur Verfügung stehende Filterfläche im Filtereinsatz erhöht wird.

Zur Lösung der vorgenannten Aufgabe wird mit der Erfindung für einen gattungsgemäßen Rückspülfilter vorgeschlagen, dass die Rückspüleinrichtung wenigstens zwei voneinander getrennte, höhenversetzt zueinander angeordnete Spülkammern mit zugehöriger Spaltöffnung und eine relativ zu den Spülkammern begrenzt drehbewegliche Hohlwelle aufweist, die im Bereich der ersten Spülkammer einen ersten Radialauslass und im Bereich der zweiten Spülkammer einen zweiten Radialauslass aufweist, der höhenversetzt und umfangsversetzt zum ersten Radialauslass an der Hohlwelle angeordnet ist, wobei die Bewegungsrichtung der Rückspüleinrichtung mittels des Verstellantriebs während des Rückspülzyklus umkehrbar ist, und für beide Bewegungsrichtungen Mitnahmemittel zum Mitbewegen von Spüleinrichtung und Hohlwelle in die jeweilige Bewegungsrichtung nach einer Richtungsumkehr und Relativverdrehung zwischen Hohlwelle und Spülkammer vorgesehen sind. Die Erfindung geht von einer rotierbaren Rückspüleinrichtung aus, wobei für den Rückspülprozess die Ausgestaltung derart getroffen ist, dass die Bewegungsrichtung der Rückspüleinrichtung mittels des Verstellantriebs während des Rückspülzyklus umkehrbar ist beziehungsweise umgekehrt wird. Durch diese Richtungsumkehr sowie den Aufbau einer Rückspüleinrichtung mit einer Hohlwelle und Spülkammern, zwischen denen eine Relativverdrehung bei bzw. nach einer Richtungsumkehr stattfinden kann, wird auf konstruktiv einfache Weise erreicht, dass entweder nur die eine Spülkammer, bzw. eine erste Gruppe von Spülkammern, oder eine andere Spülkammer bzw. eine zweite Gruppe von Spülkammern, aktiv ist, während die jeweils andere(n) Spülkammer(n) inaktiv sind.

Gemäß der bevorzugten Ausgestaltung wird die Anordnung derart getroffen, dass die Hohlwelle drehfest mit dem Verstellantrieb gekoppelt ist, wobei vorzugsweise die Kopplung über ein Verzahnungsgetriebe erfolgt. Der Verstellantrieb kann insbesondere eine linearverschiebliche Zahnstange umfassen, die mit einem mit der Rückspüleinrichtung gekoppelten Zahnrad zum Drehen der Rückspüleinrichtung kämmt, wobei der Verstellantrieb vorzugsweise aus einem Pneumatik-Linearantrieb besteht. Gemäß der insbesondere bevorzugten Ausgestaltung ist dabei das Zahnrad mit der Hohlwelle drehfest verbunden, die dann wiederum die Spülkammern nach einer Richtungsumkehr über die Mitnahmemittel mitnimmt.

Für einen optimierten Rückspülzyklus kann ferner beim erfindungsgemäßen Rückspülfilter dem Schlammablass ein Spülventil zugeordnet sein, das mittels einer Bewegung des Verstellantriebs, insbesondere der Zahnstange, öffenbar ist und bei Rückkehr des Verstellantriebs bzw. der Zahnstange in eine Ausgangsstellung geschlossen wird. Durch mechanische Kopplung des Öffnungs- und Schließvorgangs des Spülventils mit der Bewegung des Verstellantriebs bzw. der Zahnstange kann auf einfache Weise sichergestellt sein, dass das Spülventil immer öffnet, wenn die Rückspüleinrichtung einen Rückspülzyklus durchführt, und zugleich geschlossen ist, wenn kein Rückspülzyklus stattfindet. Gemäß einer vorteilhaften Ausgestaltung kann die Zahnstange hierzu an ihrer Stirnseite mit einem Schaltnocken oder Schaltfläche zum Betätigen des Spülventils versehen sein. Das Spülventil kann insbesondere gegen die Rückstellkraft einer Rückstellfeder mittels der Zahnstange während des Rückspülzyklus in eine Öffnungsstellung bewegbar sein, wodurch die in der Rückstellfeder bei Öffnen des Spülventils aufgebrachte Kraft für ein automatisches Schließen des Spülventils sorgen kann, wenn die Verstelleinrichtung beziehungsweise die Zahnstange in ihre Ausgangsstellung zurückkehrt.

Um eine lange, wartungsfreie Betriebszeit eines Rückspülfilters zu erzielen, ist ferner vorteilhaft, wenn die Spülkammer(n) während eines Rückspülzyklus mittels der Verstelleinrichtung in beide Bewegungsrichtungen um wenigstens 360 Grad verdrehbar ist (sind), und vorzugsweise um mehr als 360 Grad, insbesondere um 360 Grad plus wenigstens die Bogenlänge so vieler Stege und Fenster, dass die Strömung an allen Fenstern während einer 360° Drehung voll ausgebildet ist.

Weiter vorzugsweise kann jede Spülkammer sowie die zugehörige Spaltöffnung eine Höhe aufweisen, die sich genau oder im Wesentlichen genau über die Höhe jeweils eine Gruppe der versetzt zueinander angeordneten schlitzartigen Fenster erstreckt. Jede Spülkammer hat mithin einen Spülspalt als Einlass, dessen Höhe an die längere Seite der schlitzartigen Fenster im Stützkäfig angepasst ist. Bei einem konstruktiv besonders einfachen Aufbau bestehen die Spülkammern aus gleichartigen, miteinander lösbar verbundenen Kammermodulen, wobei jeweils zwei Kammermodule zu einer Doppelkammer zusammengesetzt sind, wobei vorzugsweise zwischen zwei Kammermodulen einer Doppelkammer eine Trennscheibe positioniert ist. Über die Trennscheiben werden mithin die Spülkammern einer Doppelkammer voneinander separiert. Besonders vorteilhaft ist, wenn sämtliche Kammermodule mittels durchgehender Stangen zu einem Spülkammereinsatz verbunden sind, welcher partiell drehbeweglich an der Hohlwelle gelagert ist. Die Spüleinlässe sämtlicher Spülkammern können bei dieser Ausgestaltung auf einer gemeinsamen Axiallinie liegen, da über die Relativlage von Hohlwelle einerseits und Spülkammereinsatz andererseits aktuell bestimmt wird, welche der Spülkammern über einen Radialauslass in der Hohlwelle an den Spülanschluss angeschlossen ist und welche Spülkammern inaktiv sind.

Insbesondere vorteilhaft ist, wenn der Filtereinsatz mehrere Untergruppen aufweist, wobei jede Untergruppe jeweils eine Gruppe von ersten Fenstern und eine Gruppe von zweiten Fenstern umfasst, und die Hohlwelle genau zwei umfangsversetzt und höhenversetzt positionierte Radialauslässe aufweist, wobei vorzugsweise der erste Radialauslass der/den obersten Untergruppe(n) und der zweite Radialauslass der/den unteren Untergruppe(n) zugeordnet sind. Falls eine ungerade Anzahl von Untergruppen vorhanden ist, kann dann der obere Radialauslass nur der höher positionierten Gruppe von Fenstern der mittleren Untergruppe und der tiefer positionierte beziehungsweise untere Radialauslass zusätzlich der unteren Gruppe von Fenstern der mittleren Untergruppe zugeordnet sein.

Gemäß einer bevorzugten Ausgestaltung besteht das Filtermittel aus einem plissierten, vorzugsweise mehrlagigen Filtergewebe oder Filtertuch, das zwischen dem Stützkäfig und einem vorzugsweise von einem Lochblech gebildeten Stützmantel angeordnet ist. Durch die Plissierung erhält das Filtermittel eine Vielzahl von Plissierungsfalten und insbesondere vorteilhaft ist, wenn die Anzahl der Plissierungsfalten an die Anzahl der Fenster bzw. Stege einer Gruppe angepasst ist. Insbesondere bei dieser Ausgestaltung kann die Anordnung dann derart getroffen werden, dass jeder Plissierungsfalte jeweils mehrere höhenversetzt zueinander am Stützkäfig angeordnete Fenster zugeordnet sind, aber im Bereich einer bestimmten Spülkammer entweder nur ein Fenster der Gruppen von ersten Fenstern oder ein Fenster der Gruppe von zweiten Fenstern, wodurch der momentane Wirkbereich bei der Rückspülung im Wesentlichen immer auf eine Plissierungsfalte konzentriert wird.

Um dies zu erreichen, können gemäß einer Ausgestaltung die Fenster und/oder die Stege jeder Gruppe schräg zu einer Radialebene verlaufen, also in einer Ebene, welche sich in Richtung der Filterachse und quer zur Filterachse erstreckt, wobei die Fenster der einen Gruppe und die Fenster der anderen Gruppe dann vorzugsweise um denselben Winkel, aber in entgegengesetzte Richtungen, schräg zu dieser Radialebene stehen.

Gemäß einer alternativen Ausgestaltung kann das Filtermittel aus einem plissierten, vorzugsweise mehrlagigen Filtergewebe oder Filtertuch mit Plissierungsfalten bestehen, und außerdem fassen sämtliche Stege mit einer Stegfront jeweils in eine Plissierungsfalte ein. Hierbei ist insbesondere vorteilhaft, wenn sich die Stegfront jedes Stegs bis zum Faltengrund einer Plissierungsfalte erstreckt. Durch diese Ausgestaltung kann der das plissierte Filtermittel mittels der Stege des Stützkäfigs fixiert werden, wobei zugleich mittels der in die Plissierungsfalten eintauchenden Stege Blindströmungen von der Seite in die Fenster vermieden werden. Vorzugsweise können jeder Plissierungsfalte jeweils mehrere Fenster unterschiedlichen Gruppen von ersten Fenstern oder von zweiten Fenster zugeordnet sein. Da die Stege der nächsten bzw. anderen Gruppe in axialer Verlängerung eines Fensters liegen, werden zugleich auch Blind- oder Bypassströmungen innerhalb einer Plissierungsfalte von oben und/oder von unten effektiv unterbunden. Von besonderem Vorteil ist hierbei, dass während des Rückspülprozesses Fluid über das Fenster und die Spaltöffnung in die Spülkammer hineingezogen wird, wodurch ein Sog auf die Plissierungsfalten des Filtermittels ausgeübt wird und eine zusätzliche Abdichtung des momentan rückgespülten Fensters bewirkt wird. Bei der Ausgestaltung mit in die Plissierungsfalten eintauchenden Stegen ist besonders vorteilhaft, wenn sich sämtliche Stege radial erstrecken, und vorzugsweise symmetrisch zu einer Radialebene ausgebildet sind, und/oder wenn die Stegfront jedes Stegs als sich zu ihrer freien Stirnfront verjüngende Stegspitze ausgebildet ist, wobei vorzugsweise die Stirnfront gerundet ist und hierdurch an die Rundung der Plissierungsfalte angepasst ist.

Für einen besonders einfachen konstruktiven Aufbau sorgt auch, wenn der Stützkäfig modulartig aufgebaut ist und mehrere zueinander gleiche, ringförmige Stegelemente aufweist, die zwischen zwei mit einem Deckelrand eine radiale Abdichtung ermöglichenden Stirndeckeln eingespannt sind, wobei jedes Stegelement vorzugsweise aus Kunststoff besteht und wenigstens einen Basisring aufweist, an dem integral mehrere umfangsversetzt zueinander positionierte Stege angeformt sind, wobei vorzugsweise der Stützkäfig eine geradzahlige Anzahl von Stegelementen aufweist. Gemäß einer Variante können jeweils zwei Stegelemente ein Stegelementpaar bilden, die mit ihren Basisringen aneinanderstoßend zwischen den Stirndeckeln eingespannt sind. Bei dieser Ausgestaltung kann mithin durch Einsatz nur einer Art von Stegelement eine Untergruppe erzeugt werden, bei welcher zwei Gruppen von versetzt am Innenumfang des Stützkäfigs und am Außenumfang des Stützkäfigs positionierter Fensteröffnungen der Fenster entstehen. Eine Gruppe oder Untergruppe kann aber auch vollständig mittels eines Stegelementes als modulartiges Bauteil gebildet werden.

Gemäß einer Ausgestaltung können die Stege an einer Stirnseite des Basisrings ausgebildet sein und schräg zu einer Radiallinie ausgerichtet verlaufen. Es versteht sich, dass hierzu die Stege eine ausreichende Länge aufweisen müssen, wodurch der Stützkäfig eine gewisse Dicke erhält. Es können insbesondere mehrere Stegelementpaare zwischen den Stirndeckeln angeordnet sein, wobei jeweils zwischen zwei Stegelementpaaren dann ein Zwischenring angeordnet sein kann. Für die Fertigung eines solchen, modulartig aufgebauten Stützkäfigs ist insbesondere vorteilhaft, wenn die Stege der Stegelemente an ihren freien Stegenden mit integral angeformten Arretierzapfen zum Einfassen in Arretierlöchern in den Stirndeckeln oder Zwischenringen versehen sind.

Bei einer Ausgestaltung mit in die Plissierungsfalten eintauchenden Stegen können die Stege der Stegelemente an ihren freien Stegenden, vorzugsweise abwechselnd, mit integral angeformten Arretierzapfen oder Arretierlöchern versehen sein, und der Basisring kann an einer Stirnseite, ggf. entsprechend abwechselnd, mit Arretierzapfen und Arretierlöchern versehen sein, die im Montagezustand untereinander zusammenwirken, wobei sich die Stegfronten der Stege radial außerhalb des Basisrings erstrecken. Falls sich die Stegfronten der Stege radial außerhalb des Basisrings erstrecken, ist besonders vorteilhaft, wenn die Stegfronten beidseitig nach oben und unten über die Stirnseiten des Basisring vorkragen. Vorzugsweise können dabei die Stegfronten über die mit den Arretierlöchern versehene Stirnseite des Basisrings entsprechend dessen Dicke in Axialrichtung vorkragen, so dass im Montagezustand zweier ineinandergesetzter Stegelemente der Steg der benachbarten Gruppe sich in Axialrichtung bis an das Fenster der nächsten Gruppe heran erstreckt und eine Abstützung der Plissierungsfalte auch im Angrenzungsbereich eines Fensters gewährleistet, um Bypass-Strömungen besonders effektiv zu unterbinden.

Weiter vorzugsweise können die Stirndeckeln mittels Ankerstangen miteinander verbunden sein, wobei zwischen den Stirndeckeln auch der Stützmantel und das zwischen Stützmantel und Stützkäfig angeordnete Filtermittel angeordnet, insbesondere eingefasst wird.

Die vorgenannte Aufgabe wird auch durch einen gattungsgemäßen Filtereinsatz gelöst, bei welchem gemäß einer Ausgestaltung die Fenster und/oder die Stege jeder Gruppe schräg zu einer Radialebene verlaufen, wobei die Fenster der einen Gruppe und die Fenster der anderen Gruppe um denselben Winkel, aber in entgegengesetzte Richtungen, schräg zur Radialebene stehen. Ein solcher Filtereinsatz kann bei Verwendung zusammen mit einem plissierten Filtermittel vorteilhaft sein.

Eine alternative Ausgestaltung eines gattungsgemäßen Filtereinsatzes mit einem Stützkäfig zum Abstützen eines Filtermittels, wobei der Stützkäfig mindestens zwei Gruppen von schlitzartigen Fenstern aufweist, die innerhalb jeder Gruppe zueinander parallel ausgerichtet verlaufen und durch zueinander parallele Stege des Stützkäfigs voneinander getrennt sind, wobei die schlitzartigen Fenster der einen Gruppe versetzt gegenüber denjenigen der anderen Gruppe(n) angeordnet sind und die Fenster der einen Gruppe mit den Stegen der anderen Gruppe(n) in einer gemeinsamen Ebene liegen, löst die obige Aufgabe dadurch, dass das Filtermittel aus einem plissierten, vorzugsweise mehrlagigen Filtergewebe oder Filtertuch besteht, und dass sämtliche Stege mit einer Stegfront jeweils in eine Plissierungsfalte einfassen.

Bei dieser Ausgestaltung mit in die Plissierungsfalten einfassenden Stegen ist insbesondere vorteilhaft, wenn sämtliche Stege sich radial erstrecken, und vorzugsweise symmetrisch zu einer Radialebene ausgebildet sind, und/oder wenn die Stegfront jedes Stegs als sich zu ihrer freien Stirnfront verjüngende Stegspitze ausgebildet ist, wobei vorzugsweise die Stirnfront gerundet ist. Ferner können jeder Plissierungsfalte jeweils mehrere Fenster unterschiedlicher Gruppen von ersten Fenstern oder von zweiten Fenstern zugeordnet sein.

Bei beiden alternativen Ausgestaltungen mit geraden oder mit schrägstehenden Stegen kann der Stützkäfig des Filtereinsatzes modulartig aufgebaut sein und mehrere, zueinander gleiche, ringförmige Stegelemente aufweisen, die zwischen zwei Stirndeckeln eingefasst sind, wobei jedes Stegelement vorzugsweise aus Kunststoff besteht und wenigstens einen Basisring aufweist, an dem integral mehrere umfangsversetzt zueinander positionierte Stege angeformt sind, und wobei vorzugsweise der Stützkäfig eine geradzahlige Anzahl von Stegelementen aufweist. Bei einer möglichen Variante bilden jeweils zwei Stegelemente ein Stegelement-Paar, die mit ihren Basisringen aneinanderstoßend zwischen den Stirndeckeln eingespannt sind. Eine Gruppe oder Untergruppe kann aber auch vollständig mittels eines Stegelementes als modulartiges Bauteil gebildet werden.

Beim Filtereinsatz mit schrägstehenden Stegen, die hierzu vorzugsweise an einer Stirnseite des Basisrings ausgebildet sind und schräg zu einer Radiallinie ausgerichtet sind, ist insbesondere vorteilhaft, wenn mehrere Stegelemente zwischen den Stirndeckeln angeordnet sind, wobei jeweils zwischen zwei Stegelementpaaren ein Zwischenring angeordnet ist. Weiter vorzugsweise können die Stegelemente an ihren freien Stegenden mit integral angeformten Arretierzapfen zum Einfassen in Arretierlöchern in den Stirndeckeln oder Zwischenringen versehen sein. Die Stirndeckel können mittels Ankerstangen miteinander verbunden sein, wobei zwischen den Stirndeckeln auch der Stützmantel und das zwischen Stützmantel und Stützkäfig angeordnete, vorzugsweise aus einem plissierten Filtergewebe bestehende Filtermittel eingefasst ist. Sofern das Filtermittel plissiert ausgeführt ist, ist insbesondere vorteilhaft, wenn jeder Plissierungsfalte jeweils mehrere übereinander liegende Fenster des Stützkäfigs zugeordnet sind.

Bei der alternativen Ausgestaltung des Filtereinsatzes mit in die Plissierungsfalten eintauchenden Stegen ist besonders vorteilhaft, wenn die Stege der Stegelemente an ihren freien Stegenden abwechselnd mit integral angeformten Arretierzapfen oder Arretierlöcher versehen sind, und der Basisring an einer Stirnseite abwechselnd mit Arretierzapfen und Arretierlöchern versehen ist, die im Montagezu-stand untereinander zusammenwirken, wobei vorzugsweise sich die Stegfronten der Stege radial außerhalb des Basisrings erstrecken. Sofern sich die Stegfronten der Stege radial außerhalb des Basisrings erstrecken, können die Stegfronten vorzugsweise beidseitig in Axialrichtung nach oben und unten über die Stirnseiten des Basisring vorkragen, wobei die Stegfronten vorzugsweise über die mit den Arretierlöchern versehene Stirnseite des Basisrings entsprechend dessen Dicke in Axialrichtung vorkragen, wodurch jede Plissierungsfalte jeweils bis unmittelbar an ein Fenster heran mittels der Stege abgestützt wird.

Weitere Vorteile und Ausgestaltungen eines erfindungsgemäßen Rückspülfilters ergeben sich aus der nachfolgenden Beschreibung von in der Zeichnung schematisch gezeigten bevorzugten Ausführungsbeispielen. In der Zeichnung zeigen
**Fig. 1** schematisch vereinfacht, teilweise aufgebrochen, einen erfindungsgemäßen Rückspülfilter in perspektivischer Ansicht;
Fig. 2 eine Detailansicht der Verstelleinrichtung des Rückspülfilters aus Fig. 1;
**Fig. 3** eine Einzeldarstellung von Hohlwelle nebst Spülkammern mit einem Rückspülfilter nach Fig. 1 ;
**Fig. 4** die Spüleinrichtung nach Fig. 3 in Explosionsdarstellung;
**Fig. 5** den beim Rückspülfilter nach Fig. 1 einsetzbaren Filtereinsatz im Detail in perspektivischer Darstellung gemäß einer ersten Ausführungsvariante;
**Fig. 6** schematisch den Filtereinsatz aus Fig. 5, teilweise aufgebrochen im Rückspülzyklus;
**Fig.**
   **7A** - **7D** Schnittansicht entlang der Horizontalebenen VII-A bis VII-D in Fig. 6;
**Fig. 8** eine Schnittansicht entsprechend Fig. 7B nach Richtungsumkehr;
**Fig. 9** eine Detailansicht des Aufbaus des Stützkäfigs beim Filtereinsatz nach Fig. 5 in Explosionsdarstellung;
**Fig. 10** eine Spüleinrichtung mit drei Doppelspülkammern;
**Fig. 11** eine Spüleinrichtung mit vier Doppelspülkammern;
**Fig. 12** schematisch einen Stützkäfig eines Filtereinsatz gemäß einer zweiten Ausführungsvariante in Explosionsdarstellung;
**Fig. 13** in perspektivischer Ansicht ein Stegelement für den Stützkäfig nach Fig. 12;
**Fig. 14** in perspektivischer Ansicht das Stegelement aus Fig. 13 um 180° gedreht;
**Fig. 15** in Seitenansicht drei miteinander verbundene Stegelemente eines Stützkäfigs nach Fig. 12 für den Filtereinsatz gemäß zweiter Ausführungsvariante;
**Fig. 16** eine Draufsicht auf ein Stegelement eines Stützkäfigs nach Fig. 12;
**Fig. 17** das Stegelement aus Fig. 16 mit aufgezogenem plissierten Filtermittel; und
**Fig. 18** schematisch in einer Detailansicht die Strömungssituation im Rückspülzyklus an einem Fenster bei der zweiten Ausführungsvariante des Filtereinsatzes.

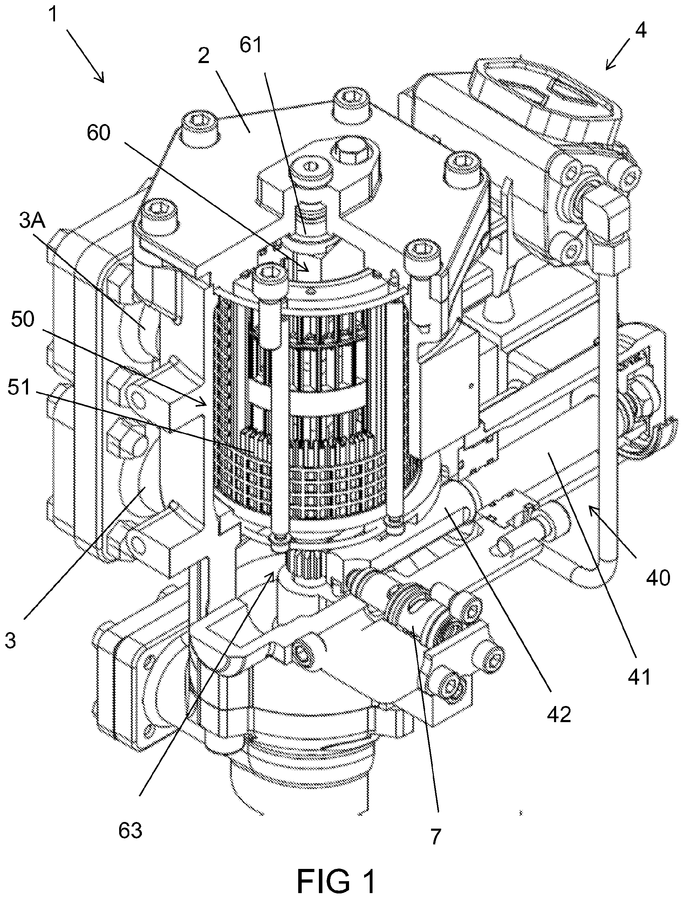

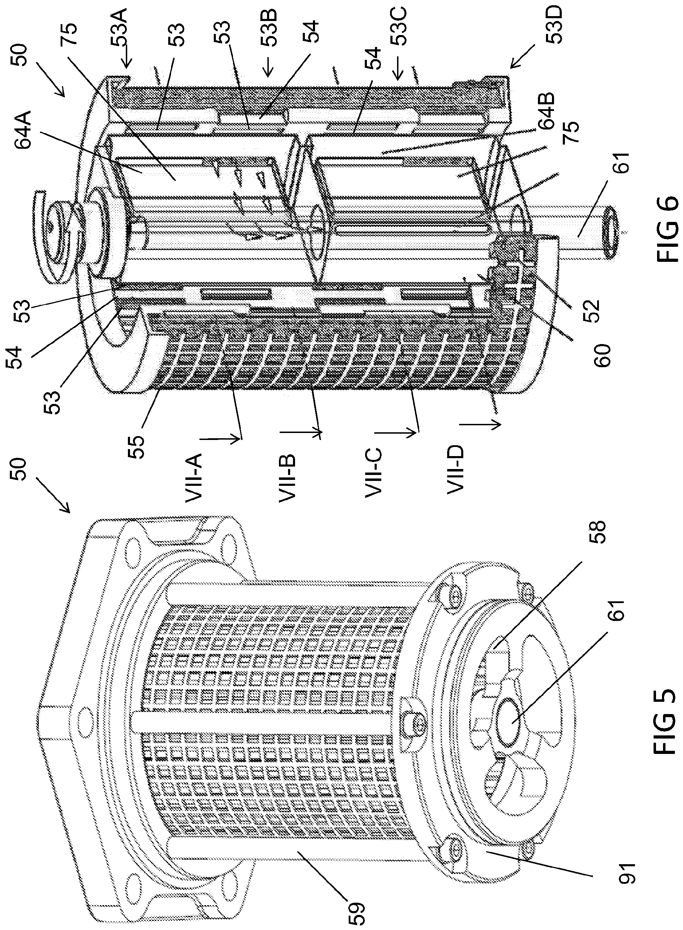

In Fig. 1 ist insgesamt mit Bezugszeichen 1 ein erfindungsgemäßer Rückspülfilter zum Rückspülen von flüssigen Medien, insbesondere flüssigen Brennstoffen, bezeichnet. Der Rückspülfilter weist ein nur teilweise dargestelltes Filtergehäuse 2 auf, in welchem sämtliche Funktionsteile für den Filtrierbetrieb zum Filtern einer Flüssigkeit angeordnet sind. Die Flüssigkeit strömt über einen Filtereinlass 3 in das Gehäuse 2 des Rückspülfilters 1 ein, tritt durch ein Filtermittel 51 eines in den Fig. 1 bis 9 insgesamt mit Bezugszeichen 50 bezeichneten Filtereinsatzes 50 hindurch und kann dann als Filtrat über den Filterauslass 3A einer nachgeschalteten Betriebseinrichtung wie beispielsweise einem Motor zugeführt werden. Das zu filternde Medium durchströmt hierbei das Filtermittel 51 des Filtereinsatzes 50 von innen nach außen und kann hierzu insbesondere von unten in den Innenraum des in Fig. 5 und 6 im Detail gezeigten Filtereinsatz 50 über Durchtritte 58 eintreten.

Der Differenzdruck zwischen Filtereinlass 3 und Filterauslass 3A kann mittels eines Differenzdruckanzeigers 4, der seitlich am Filtergehäuse angeflanscht ist, überwacht werden und in Abhängigkeit des Differenzdruckes, und/oder zeitgesteuert, findet eine Reinigung des Filtermittels 51 des Filtereinsatzes 50 mittels einer Rückspülvorrichtung 60 statt, die am Filtergehäuse 2 drehbar gelagert ist und mittels einer insgesamt mit Bezugszeichen 40 bezeichneten Verstelleinrichtung sowohl im Uhrzeigersinn als auch entgegen dem Uhrzeigersinn gedreht werden kann. Die Rückspülvorrichtung 60 umfasst, wie noch erläutert werden wird, eine zentrale Hohlwelle 61, deren Hohlraum über ein Kanalsystem im Filtergehäuse 2 an einen Spülanschluss 6 angeschlossen ist, der im reinen Filtrierbetrieb des Rückspülfilters 1, d.h. wenn die Rückspüleinrichtung 60 nicht in Betrieb ist, mittels eines Spülventils 7 abgesperrt ist. Dem Spülventil 7 beziehungsweise dem Spülanschluss 6 kann noch ein Überströmventil zugeordnet sein, welches bei Überschreiten von Druckspitzen gegebenenfalls öffnet.

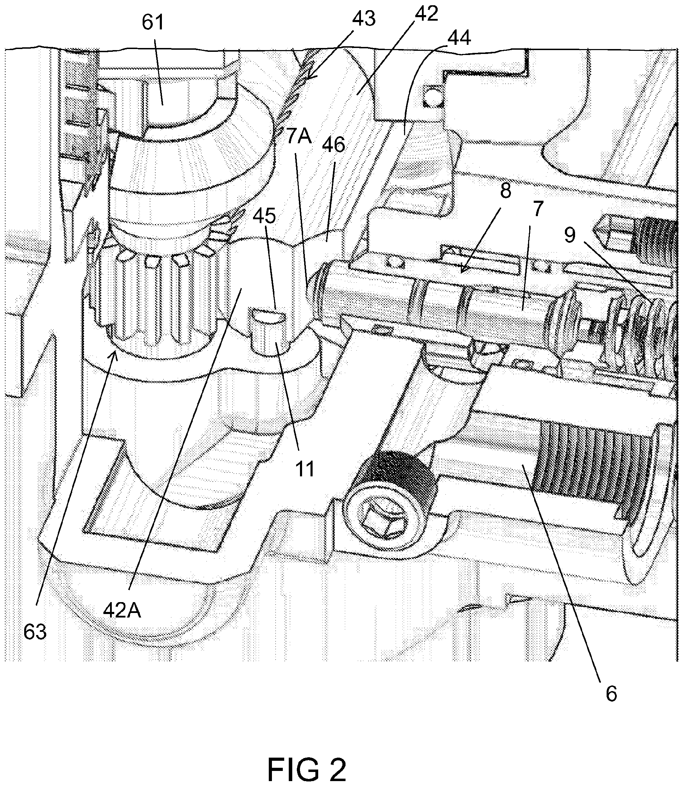

Die Verstelleinrichtung 40 besteht beim bevorzugten und in den Fig. gezeigten Ausführungsbeispiel eines Rückspülfilters 1 aus einem linearverschieblichen, pneumatisch betätigbaren Kolben-Hubzylinder 41, wobei der Kolben mit einer Zahnstange 42 gekoppelt ist, welche, wie besonders gut Fig. 2 erkennen lässt, zwar partiell gerundet ist, aber an einer Flanke mit einer Verzahnungsreihe 43 und an der gegenüberliegenden Flanke mit einer Abflachung 44 versehen ist, während die Oberseite gerundet ist und die Unterseite mit einer Führungsnut 45 versehen ist. Über die Führungsnut 45 führt sich die Zahnstange 42 an einem Führungsstift 11 im Inneren des Filtergehäuses. Die Stirnseite 42A der Zahnstange 42 weist im Übergang zu der Abflachung 44 eine bogenförmige oder als schräge Rampe ausgeführte Nockenfläche 46 auf, mit welcher ein Schaltkopf 7A des Spülventils 7 in Kontakt steht beziehungsweise bei einer Bewegung der Zahnstange 42 in Kontakt gerät. Die Nockenfläche 46 bildet den Schaltnocken für das Spülventil 7, wozu der Schaltkopf 7A als Kugelkopf ausgebildet ist bzw. aus einer Stahlkugel besteht und die Nockenfläche 46 derart gekrümmt ist, dass in der in Fig. 2 gezeigten Ausgangsstellung der Zahnstange 42 der Ventilstößel 8 des Spülventils 7 durch die Rückstellkraft einer Feder 9 in Schließstellung vorgespannt ist, während der Ventilstößel 8 seine Öffnungsstellung einnimmt, wenn die Zahnstange 42 derart weit verschoben ist, dass der Schaltkopf 7A an der Abflachung 44 anliegt. Durch diese Maßnahme wird das Bewegen der Rückspülvorrichtung (60, Fig. 1) und das Öffnen bzw. Schließen des Spülventils 7 bewegungsgekoppelt, und es wird sichergestellt, dass das Spülventil 7 im Rückspülzyklus, sobald die Zahnstange 42 um ein bestimmtes Maß bewegt wurde, immer geöffnet ist und geöffnet bleibt, bis die Verstelleinrichtung die Zahnstange 42 in ihre in Fig. 2 gezeigte Ausgangsstellung zurückbewegt hat.

Die Verzahnung 43 an der Zahnstange 42 kämmt mit einem Zahnrad 63, welches im gezeigten Ausführungsbeispiel drehfest mit der Hohlwelle 61 gekoppelt ist. Der Bewegungsweg der Verstelleinrichtung 40 und die Anzahl der Zähne an der Verzahnung 43 der Zahnstange 42 sowie des Zahnrades 63 sind derart aufeinander abgestimmt, dass die Rückspüleinrichtung 60 nach Öffnen des Spülventils 7 noch um mehr als 360 Grad zuerst in die eine Bewegungsrichtung, im gezeigten Ausführungsbeispiel im Uhrzeigersinn, und dann nach Umkehrung der Bewegungsrichtung des Pneumatikantriebs der Verstelleinrichtung 40 in die entgegengesetzte Richtung, mithin im Gegenuhrzeigersinn, um wiederum mehr als 360 Grad bewegt werden kann. Da im gezeigten Ausführungsbeispiel, wie noch erläutert werden wird, die Spülkammern 64 der Rückspüleinrichtung 60 um ein bestimmtes Winkelmaß relativ zu der Hohlwelle 61 verdreht werden können, bevor sie in die eine oder andere Bewegungsrichtung über Mitnahmemittel mitbewegt werden, ist der Bewegungsweg der Hohlwelle erheblich größer als 360 Grad. Die Hohlwelle ist vorzugsweise um 360° zuzüglich Bewegungsspiel zwischen Spülkammern und Hohlwelle zuzüglich Verstellweg zum Öffnen beziehungsweise Schließen des Spülventil verdrehbar, wobei ein Zusatzweg vorgesehen ist, damit die Spülkammern 64 bei geöffnetem Spülventil 7 das Filtergewebe 51 in Mitnahmestellung noch um 360 Grad abreinigen können. Die Hohlwelle 61 kann daher vorzugsweise um mehr als 400 Grad je Bewegungsrichtung gedreht werden und/oder die Zahnstange weist mindestens 15 % mehr Zähne auf als das Zahnrad 63.

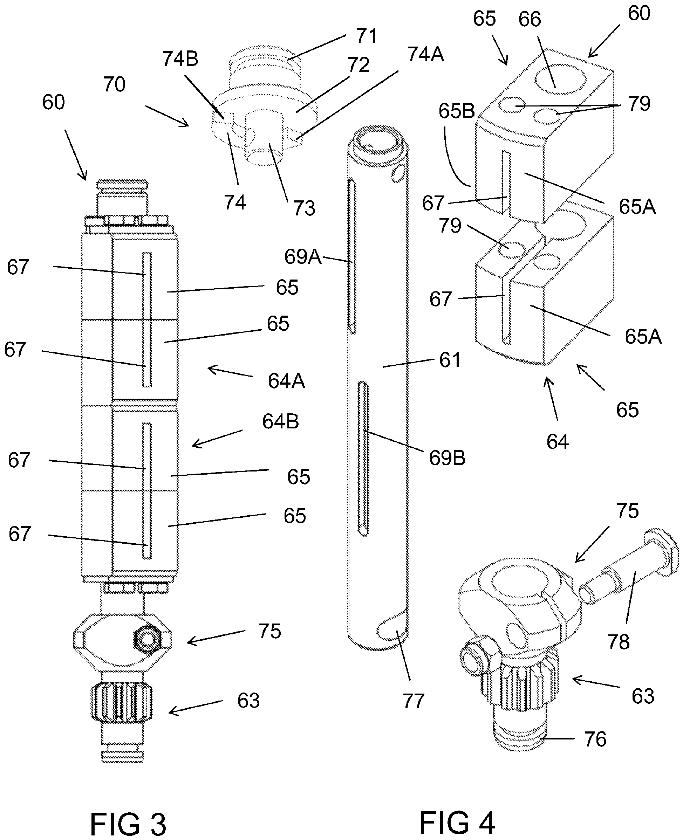

Es wird nun zuerst Bezug genommen auf die Fig. 3 und 4, in welchen die Rückspülvorrichtung 60 für den Rückspülfilter nach Fig.1 im Detail dargestellt ist. Als zentrales Bauelement weist die Rückspülvorrichtung 60 eine hier aus einem Rohrstück bestehende Hohlwelle 61 auf, die im gezeigten Ausführungsbeispiel mit 2 voneinander getrennten, höhenversetzt zueinander angeordneten Spülkammern 64A sowie 64B versehen ist. Die oberen Spülkammer 64A bildet eine erste Doppelkammer und die untere Spülkammern 64B bildet eine zweite Doppelkammer, wobei jede Doppelkammer aus zueinander identischen, um 180 Grad versetzt zueinander zusammengesetzten Kammermodulen 65 besteht, und jedes Kammermodul 65, wie besonders gut in Fig. 4 zu erkennen ist, eine Durchgangsbohrung 66 für den Durchgriff der Hohlwelle 61 und einen einseitig randoffenen Schlitz als Spaltöffnung 67 an einer seitlich gegenüber der Bohrung 66 vorkragenden Stirnseite 65A des Kammermoduls 65 aufweist. Zwei Kammermodule 65 können zu einer Doppelkammer bzw. Spülkammer 64 ineinander gesteckt werden. Zwischen zwei Kammermodulen 65 könnte auch noch eine Trennscheibe 68 angeordnet werden, welche dann sogar die jeweiligen Schlitze bzw. Spaltöffnungen 67 in den einzelnen Kammermodulen 65 außerhalb der Durchgangsbohrung 66 voneinander trennen würde, wodurch vier getrennte Spülkammern entstünden. In der Explosionsdarstellung nach Fig. 4 ist nur eines der beiden aus Kammermodulen 65 zusammengesetztes Doppelkammer-Module dargestellt. Die Hohlwelle 61 wiederum ist mit zwei umfangsversetzt zueinander und höhenversetzt zueinander positionierten Radialauslässen 69A, 69B versehen, deren Winkelversatz zueinander im gezeigten Ausführungsbeispiel näherungsweise 26 Grad beträgt, damit der radiale Versatz dafür sorgt, dass nur eines der radial inneren Enden der Schlitze oder Spaltöffnungen 75 von den Radialauslässen 69A, 69B erreicht wird. Der obere Radialauslass 69A hat eine Länge in Axialrichtung der Hohlwelle 61, die an die Länge der Schlitze bzw. Spaltöffnungen 67 einer von zwei Kammermodulen 65 gebildeten oberen Doppelkammer angepasst ist, und der untere Radialauslass 69B entsprechend eine Länge in Axialrichtung, die an die andere Doppelkammer angepasst ist. Das obere Ende der Hohlwelle 61 ist mittels eines Lagerstopfens 70 verschlossen, der mit seinem oberen Abschnitt einen Lagerstumpf 71 zur Lagerung der Hohlwelle 61 am Filtergehäuse bildet und an seiner Unterseite 72 um einen in die Hohlwelle abdichtend einschiebbaren Verschlussstopfen 73 herum mit einem Mitnahmesteg 74 versehen ist, der in zwei umfangsversetzt zueinander liegenden Stirnkanten 74A, 74B endet, die einen Winkelabstand von hier 206°, angepasst an den Winkelversatz der Radialauslässe 69A, 69B, zueinander . Der Mitnahmesteg 74 bildet mit den Stirnkanten 74A, 74B Mitnahmeanschläge als Mitnahmemittel, mit welchem bei einer Richtungsumkehr die in Drehrichtung begrenzt beweglich auf der Hohlwelle 61 angeordneten Spülkammern 64A und 64B in die eine oder andere Bewegungsrichtung der Hohlwelle 61 bei einer Rotation der Spüleinrichtung 60 mitgenommen werden. Die Stirnkanten 74A, 74B können hierbei gegebenenfalls gegen die Rückseite 65B der obersten Spülkammer 64A drücken. Alle Spülkammern 64A, 64B beziehungsweise Kammermodule 65 werden mittels durchgehender Stangen beziehungsweise Verschraubungen, welche zugehörige Löcher 79 in den einzelnen Kammermodulen 65 durchfassen, derart zu einem Spülkammereinsatz miteinander verbunden, dass sämtliche Schlitze bzw. Spaltöffnungen 67, wie aus Fig. 3 gut zu erkennen ist, entlang einer Axiallinie ausgerichtet verlaufen. Am unteren Ende der Hohlwelle 61 ist im gezeigten Ausführungsbeispiel über einen Klemmring 75 das Zahnrad 63 mit integral angeformten unteren Lagerstumpf 76 drehfest befestigt, wozu die Hohlwelle 61 mit einer Randkerbe 77 für den Durchgriff einer Klemmschraube 78 versehen ist. Während mithin das Zahnrad 63 drehfest mit der Hohlwelle 61 verbunden ist, ist der Spülkammereinsatz relativ zur Hohlwelle 61 begrenzt drehbeweglich, und zwar um dasselbe Maß, um welches die Radialauslässe 69A, 69B umfangsversetzt zueinander liegen, weswegen bei Drehung der Hohlwelle 61 in der einen Richtung, hier bei Drehung im Uhrzeigersinn, der untere Radialauslass 69B und die Schlitze bzw. Spaltöffnungen 67 in der unteren Spülkammer 64B fluchtend zueinander liegen, wodurch sie gegenüber dem Hohlraum der Hohlwelle 61 offen sind, während bei Drehung der Rückspülvorrichtung in Gegenrichtung, hier entgegen dem Uhrzeigersinn, entsprechend der obere Radialauslass 69A fluchtend und damit offen zu den Schlitzen und damit Spaltöffnungen 67 in der oberen Spülkammern 64A liegt. Die Spielpassung zwischen dem Außenumfang der Hohlwelle 61 und der Bohrung 66 in den Kammermodulen 65 ist dabei derart gewählt, dass bei nicht fluchtender Anordnung im Wesentlichen kein Fluid in den winkelversetzt zu den Spaltöffnungen 67 liegenden Radialauslass 69A, 69B übertreten kann. Falls zusätzlich noch eine Trennscheibe zwischen zwei Kammermodulen angeordnet wäre, könnte ein durch Differenzdruck aufgebaute Spülströmung sogar jeweils ausschließlich auf den Wirkbereich eines Kammermoduls 65 konzentriert sein, während er im gezeigten Ausführungsbeispiel jeweils auf eine als Doppelkammer ausgeführte Spülkammer 64A oder 64B wirkt.

Dieser Aufbau der Rückspülvorrichtung 60 wirkt sich besonders vorteilhaft in Zusammenhang mit dem speziellen Aufbau des Filtereinsatzes 50 und insbesondere eines Stützkäfigs 52 für den Filtereinsatz 50 aus. Der Aufbau eines Filtereinsatzes gemäß einer ersten Ausführungsvariante wird nun insbesondere unter Bezugnahme auf die Fig. 5 bis 9 erläutert. Der Stützkäfig 52 ist bei diesem Ausführungsbeispiel derart am Innenumfang gestaltet, dass über die Höhe des Filtereinsatzes 50 verteilt insgesamt vier höhenversetzt übereinander angeordnete Gruppen 53A, 53B, 53C, 53D von schlitzartigen Fenstern 53 vorhanden sind. Sämtliche Fenster 53 haben am Innenumfang des Stützkäfigs 52 im Wesentlichen einen rechteckförmigen Querschnitt, wobei die längere Fensterseite parallel zur Mittelachse des Filtereinsatzes 50 beziehungsweise zur Drehachse der Rückspüleinrichtung ausgerichtet verläuft und die kürzere Fensterseite sich in Umfangsrichtung des zylindrischen Stützkäfigs 52 erstreckt, wobei zwei benachbarte Fenster 53 einer Gruppe jeweils durch zueinander parallele Stege 54 voneinander getrennt sind. Bezogen auf eine Gruppe 53A wechseln sich mithin über den Umfang verteilt immer Fenster 53 und Steg 54 ab. Bei der zu einer ersten Gruppe, z.B. der Gruppe 53A, höhenversetzt liegenden nächstfolgenden Gruppe, hier also der Gruppe 53B, wechseln sich wiederum Fenster 53 und Stege 54 wechselseitig ab, wobei die Anordnung der Stege 54 in dieser benachbarten Gruppe derart getroffen, dass jeweils ein Steg 54 der Gruppe 53B in axialer Verlängerung eines Fensters 53 der Gruppe 53A liegt, und umgekehrt. In Axialrichtung betrachtet liegt mithin in Verlängerung eines Fensters 53 bei der Gruppe 53A ein Steg 54 bei der Gruppe 53B und in Verlängerung eines Steges 54 bei der Gruppe 53A ein Fenster 53 der Gruppe 53B. Im Prinzip dieselbe Anordnung ist in den Gruppen 53C und 53D getroffen. Die Gruppen 53A und 53B bilden eine obere Untergruppe und die Gruppen 53C und 53D bilden eine untere Untergruppe, und innerhalb einer Untergruppe bildet z.B. die Gruppe 53A (bzw. 53C) die erste Gruppe von Fenstern 53 und die Gruppe 53B (bzw. 53D) die zweite Gruppe von Fenstern. Aufgrund der voneinander getrennten Doppelkammern 64A, 64B in der Spülvorrichtung kommt es dabei bei den beiden mittleren Gruppen 53B, 53C nicht darauf an, ob die Stege 54 der Gruppe 53B, wie im gezeigten Ausführungsbeispiel, einem Fenster 53 in der Gruppe 53C benachbart liegen, oder ob bei diesen beiden Gruppen 53B, 53C (nicht gezeigt) jeweils die Fenster 53 oder Stege 54 in axialer Verlängerung zueinander positioniert sind. Wesentlich ist nur, dass in beiden Untergruppen jeweils ein Fenster 53 in der einen Gruppe 53C (oder 53A) in axialer Verlängerung eines Steg 54 in der anderen Gruppe 53D (oder 53B) derselben Untergruppe liegt, und umgekehrt, wodurch die Fenster 53 der einen Gruppe 53C wiederum versetzt zu den Fenstern der anderen Gruppe 53D liegen.

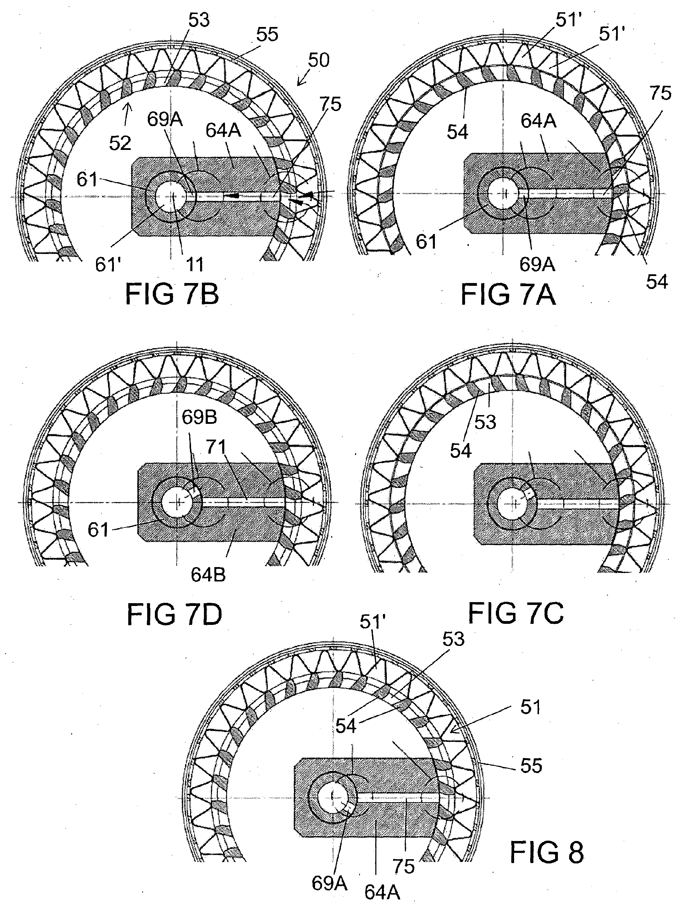

Die versetzte Anordnung von Fenstern 53 und Stegen 54 bezieht sich auf die Innenseite des Stützkäfigs 52. Das Filtermittel 51 liegt an der Außenseite des Stützkäfigs 52 an, wobei im gezeigten Ausführungsbeispiel das Filtermittel 51 aus einem plissierten Filtertuch besteht, wie vor allem die Fig. 7 und 8 zeigen, mit einer Vielzahl von Plissierungsfalten 51'. Sämtliche Plissierungsfalten 51' erstrecken sich in Axialrichtung, d.h. parallel zur zentralen Mittelachse des Stützkäfigs 52 bzw. Filtereinsatzes 50. Jeweils eine zur Innenseite des plissierten Filtermittels 51 offene Plissierungsfalte 51' liegt mit beiden Faltenbögen an zueinander benachbarten Stegen 54 der Gruppen von Fenstern 53 anliegt. Das plissierte Filtertuch 51 hat in Radialrichtung eine gewisse Tiefe und wird außen noch von einem Stützmantel 55 umgeben, der das plissierte Filtertuch 51 in der gewünschten Ausrichtung und Lage relativ zu den Stegen 54 und Fenstern 53 am Filtereinsatz 50 hält bzw. einspannt. Die einzelnen Stege 54, und hierdurch auch die zwischen zwei Stegen 54 befindlichen Fenster 53, verlaufen schräg zu einer gedachten Radiallinie. In Fig. 7 sind vier Schnittansichten in unterschiedlichen Schnittebenen senkrecht auf die Filterachse entlang der Linien VII-A, VII-B, VII-C beziehungsweise VII-D dargestellt. Jede Schnittebene liegt hierbei etwa mittig einer der Gruppen 53A, 53B, 53C beziehungsweise 53D von Fenstern 53. Ein Vergleich der einzelnen Schnittansichten lässt gut erkennen, dass bei den Gruppen 53A, 53C die Schrägstellung der Fenster 53 in die eine Richtung, und bei den Gruppen 53B, 53D die Schrägstellung der Fenster 53 und damit auch der jeweiligen Stege 54 in die andere Richtung erfolgt. Diese Schrägstellung der Stege 54 beziehungsweise Fenster 53 gleicht jeweils den Umfangsversatz zweier benachbarter Plissierungsfalten 51' derart aus, dass bei einem sich über die gesamte Höhe des Filtereinsatzes 50 erstreckenden plissierten Filtertuch 51 die inneren Faltenbögen immer an einem Steg 54 des Stützkäfigs 52 anliegen, und am Außenumfang des Stützkäfigs 52 immer ein Fenster 53 mittig zu einer einzigen Plissierungsfalte 51' liegt, und zwar in allen Gruppen 53A, 53B, 53C, 53D von Fenstern 53. Diese exakte Positionierung des Filtertuchs 51 relativ zum Stützkäfig 52 sorgt dafür, dass über ein beliebiges Fenster 53 genau eine Falte 51' im Wirkbereich dieses Fensters 53 liegt. Durch die Schrägstellung der Stege 54 und den schrägen Verlauf der Fenster 53 wird der Winkelversatz zwischen den Fenstern der einen Gruppe 53A, 53C und den Fenstern 53 der anderen Gruppe 53B, 53D bezogen auf einzelne Plissierungsfalten 51' ausgeglichen wird.

Die Anordnung der Fenster 53, Stege 54 sowie Plissierungsfalten 51' wirkt sich zwar nicht im Filtrierbetrieb, aber im Rückspülbetrieb während eines Rückspülzyklus aus und dies wird nun im Einzelnen erläutert. Die Fig. 6 zeigt schematisch über die Pfeile beispielhaft zu einem bestimmten Zeitpunkt die Rückspülwirkung während eines Rückspülzyklus. In der Darstellung gemäß Fig. 6 bewegt sich die Hohlwelle 61 und damit die Rückspülvorrichtung 60 im Gegenuhrzeigersinn. Eine Rückspülung, d.h. eine Abreinigung der Innenseite des Filtermittels 51, findet im Wirkbereich des einen, einzigen aktiven Fensters 53 vor der zu diesem Zeitpunkt aufgrund der Relativlage zwischen Hohlwelle 61 und Spülvorrichtung 60 aktiven Spülkammer 64A statt. Es wird in Fig. 6 momentan nur an einem der Fenster 53 in der unteren Gruppe 53B der oberen Untergruppe rückgespült. Zwar liegen die Spaltöffnungen 75 beider Kammermodule 65 der oberen Spülkammer 64A fluchend mit dem Abschnitt des Radialauslasses 69A der Hohlwelle 61. Da jedoch jeweils der Schlitz bzw. die Spaltöffnung 75 an der Stirnseite der als Doppelkammer ausgeführten oberen Spülkammer 64A partiell oder vollständig vor einem Steg 54 liegt, kann in dieser Drehstellung nur über die momentan freie Fläche der Spülkammer 64A ein Freispülen des Filtermittels 51 stattfinden. Dreht sich allerdings die Hohlwelle 61 weiter in Bewegungsrichtung, wirkt vorübergehend die Spülkammer 64A partiell über die Höhe des Schlitzes bzw. der Spaltöffnung 75 in der oberen Spülkammer 64A. Solange sich die Bewegungsrichtung nicht ändert, liegen die Radialauslässe 69B an der Hohlwelle 61, wie in den Schnittansichten 7C, 7D gezeigt, winkelversetzt zu den Spaltöffnungen 75 der Spülkammer 64B, weswegen in der unteren Untergruppe während der Bewegung der Rückspülvorrichtung in diese Drehrichtung keine Rückspülung stattfindet. Eine Rückspülung findet während des Rückspülzyklus statt, weil, wie unter Bezugnahme auf die Fig. 1 und 2 erläutert, immer dann, wenn die Zahnstange des Verstellantriebs zur Rotation der Rückspülvorrichtung 60 ihre Ausgangslage verlässt, das Rückspülventil geöffnet wird und dadurch der Hohlraum 61' in der Hohlwelle 61 an den Spülauslass angeschlossen ist.

In der einen Drehrichtung wird mithin mit der oberen Spülkammer 64A im Bereich der oberen Gruppen 53A, 53B von Fenstern 53 ein Freispülen der Falten 51' des Filtermittels 51 bewirkt. Nach einer Richtungsumkehr der Drehrichtung der Rückspülvorrichtung, wozu die Zahnstange des Verstellantriebs (vgl. Fig. 1) in Richtung Ausgangstellung zurückgezogen wird, wird die Rückspülung auf die unteren beiden Gruppen 53C, 53D von Fenstern über die unteren Spülkammer 64B verlagert. Zuerst findet dabei eine Relativdrehung zwischen Hohlwelle 61 und Spülvorrichtung 60 statt, indem sich die Hohlwelle in Gegenrichtung bewegt, bis der zweite Anschlag (74B) am Mitnahmemittel (74, Fig. 4) in Kontakt mit der zugehörigen Spülkammer 64A der Spülvorrichtung 60 gelangt und dann die Spülvorrichtung 60 mitnimmt.

Nach Richtungsumkehr finden im Prinzip dieselben Vorgänge statt wie unter Bezugnahme auf die Figuren 7A bis 7D erläutert, allerdings jeweils im Bereich der unteren Spülkammer 64B. Die Schnittansicht in Fig. 8 entspricht der Schnittansicht 7B, wobei allerding wegen des Winkelversatz zwischen Radialauslass 69A und Spaltöffnung 75 in der Spülkammer 64A keine Rückspülung des Filtermittels im Bereich dieser Spülkammer stattfindet, unabhängig davon, ob die zugehörige Spaltöffnung 75 einem Fenster 53 fluchtend gegenüberliegt oder nicht.

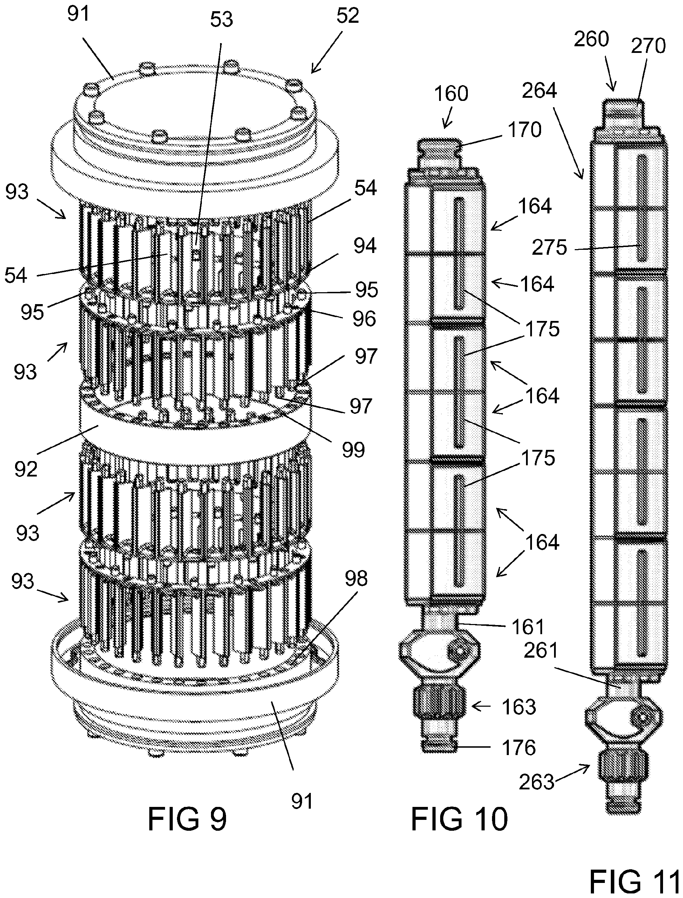

In Fig. 9 ist ein fertigungstechnisch besonders vorteilhafter Aufbau eines Stützkäfigs 52 für einen Filtereinsatz 50 bei der erfindungsgemäßen Lösung gezeigt. Der Stützkäfig 52 besteht aus nur drei unterschiedlichen Einzelteilen, nämlich zwei zueinander gleich aufgebauten Stirndeckeln 91, einem Zwischenring 92 sowie vier zueinander identischen Stegelementen 93. Jedes Stegelement besteht vorzugsweise aus Kunststoff mit einem Basisring 94, an dessen einen Seite umfangsversetzt schräg stehende Stege 54 derart integral angeformt sind, dass zwischen zwei schräg stehenden Stegen 54 entsprechend schräg stehende Fenster 53 gebildet werden, wobei an der Rückseite des Basisrings wechselweise Zapfen 95 und Zapfenlöcher 96 ausgebildet sind. Die Zapfenlöcher 96 und Zapfen 95 sind derart verteilt an der einen Seite des Basisrings 94 angeordnet, dass zwei Basisringe 94 mit einander zugewandt liegenden Rückseiten zusammen gesteckt werden können. Da die Stege 54 an den dann zusammengesteckten Stegelementen 93 schräg stehen, entsteht hierdurch der für den Stützkäfig 52 gewünschte Effekt der gegensinning schräg zueinander stehenden Fenster 53 beziehungsweise Stege 54. Die freien Stirnenden der Stege 54 wiederum sind mit Arretierzapfen 97 versehen, die in entsprechende Arretierlöcher 98 in den Stirndeckeln 91 oder aber in Arretierlöcher 99 im Zwischenring 92 einfassen können. Mit nur drei zueinander unterschiedlichen Elementen kann mithin ein Stützkäfig modulartig aufgebaut werden, wobei problemlos zwischen zwei Stirndeckeln ein weiterer Zwischenring sowie ein weiteres Paar von Stegelementen angeordnet werden könnte, um einen axial längeren Filtereinsatz mit dann sechs Gruppen von Fenstern zu erhalten. Für noch längere Baugrößen von Filtereinsätzen könnten entsprechend weitere Zwischenringe und Stegelemente angeordnet werden, wobei zum Schluss die beiden Stirndeckeln 91 über Ankerstangen (59, Fig. 5) derart miteinander verspannt werden, dass der Stützkäfig, das plissierte Filtertuch und der Stützmantel zwischen den Stirndeckeln 91 eingefasst wird. Durch Einfüllen eines Klebers kann die Plissierung des Filtermittels zwischen den Stirndeckeln und dem Stützkäfig radial abgedichtet eingefasst werden. Anstelle einer Klebung könnte auch eine Schweißnaht vorgesehen werden oder es wird eine Dichtnaht angespritzt. Die Ankerstangen (59, Fig. 5) dienen der zusätzlichen Stabilität, der Schaffung eines als Ganzes entnehmbaren Einsatzes und der Fixierung des Elementes zwischen den Stirndeckeln, wobei einer der Stirndeckel die Durchdritte (58, Figur 5) integral aufweisen kann.

In den Fig. 1 bis 9 ist der Aufbau eines Rückspülfilters mit jeweils zwei ersten Gruppen und zwei Gruppen von Fenstern und zugehörigen separaten Spülkammern, mithin insgesamt vier Spülkammern dargestellt. Der modulartige Aufbau sowohl des Stützkäfigs 52 als auch der Spülvorrichtung 60 ermöglicht, mit denselben Elementen, dann bei größerem Gehäuse, die zur Verfügung stehende Filterfläche durch eine Verlängerung des Stützkäfigs und entsprechend eine längere Ausgestaltung der Rückspülvorrichtung auf relativ einfache Weise zu erhöhen. Die Fig. 10 zeigt eine Rückspülvorrichtung 160 mit insgesamt 6 Spülkammern 164, von denen jeweils zwei zu einer Doppelkammer, wie weiter oben beschrieben, zusammengefasst sind, wodurch insgesamt drei Untergruppen, nämlich eine obere Untergruppe, eine mittlere Untergruppe und eine untere Untergruppe entstehen, die jeweils zwei Spülkammern umfassen. Die Hohlwelle 161 ist wie beim vorherigen Ausführungsbeispiel am oberen Ende mit einem die Mitnahmemittel umfassenden Lagerstopfen 170 und am unteren Ende mit einem Zahnrad 163 und unterem Lagerstumpf 176 versehen. Die Radialauslässe (nicht dargestellt) an der Hohlwelle 161 können derart angeordnet sein, dass einer der beiden Radialauslässe den drei untersten Spülkammern 164 nebst zugehöriger Spaltöffnung 175 zugeordnet ist, während der höher liegende Radialauslass den drei oberen Spülkammern 164 nebst zugehöriger Spaltöffnung 175 zugeordnet ist. Je nach Anordnung der Fenster im Stützkäfig sind dann bei der einen Drehrichtung entweder eine Spülkammer 164 oder zwei Spülkammern 164 im Rückpülzyklus aktiv. Die Radialauslässe an der Hohlwelle könnten auch anders angeordnet sein. So könnte sich der untere Radialauslass über die unteren vier Spülkammern und der obere Radialauslass nur über die oberen beiden Spülkammern erstrecken, wodurch die Spülintensität an den oberen beiden Spülkammern 164, und damit an den am Weitesten vom Spülventil entfernt liegenden Spülkammern, geringfügig gegenüber den anderen Spülkammern erhöht wird.

Die Fig. 11 zeigt noch ein weiteres Ausführungsbeispiel einer Rückspülvorrichtung 260, diesmal mit insgesamt acht Spülkammern 264, deren Spaltöffnung 275 wie bei dem vorherigen Ausführungsbeispiel sämtlich auf einer gemeinsamen Axiallinie angeordnet sind. Wie bei den vorherigen Ausführungsbeispielen ist die Hohlwelle 261 am unteren Ende mit einem Zahnrad 263 und am oberen Ende mit einem Lagerstopfen 270 versehen. Auch könnten wiederum nur zwei Radialauslässe an der Hohlwelle 261 vorgesehen sein, wobei sich jeder Radialauslass über insgesamt vier Spülkammern 264 erstreckt. Natürlich könnten auch vier Radialauslässe vorgesehen sein, wobei jeweils zwei Radialauslässe auf derselben Axiallinie angeordnet sind und die anderen beiden Radialauslässe um den vorgegebenen Winkelversatz versetzt an der Hohlwelle positioniert sind.

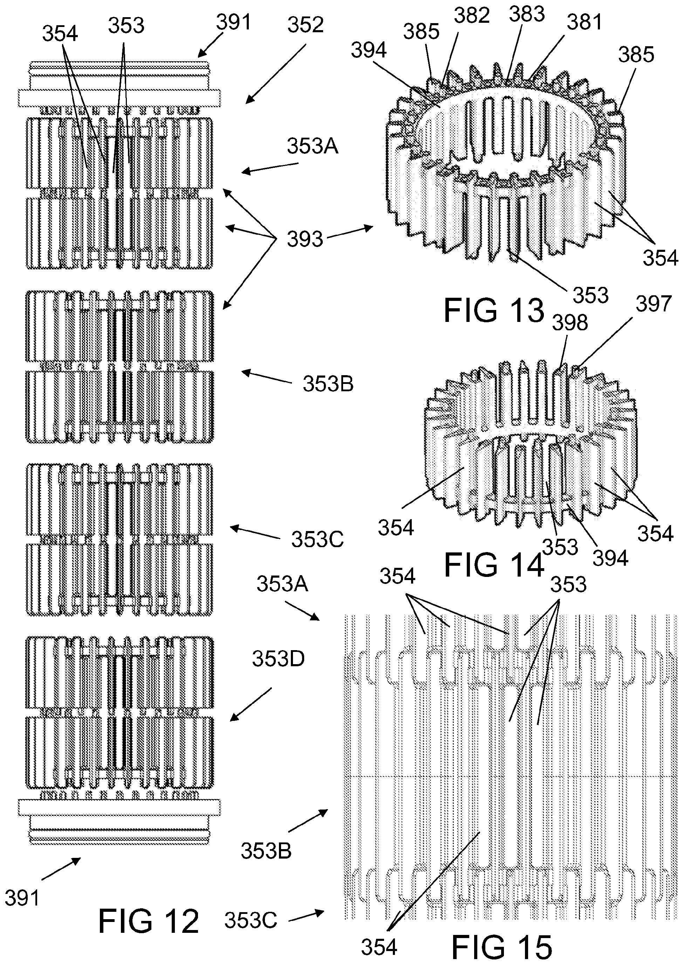

Die Figuren 12 bis 18 zeigen eine zweite Ausführungsvariante eines Filtereinsatzes 350 mit plissiertem Filtermittel 351. Funktionsgleiche Bauteile sind mit um 300 gegenüber der ersten Ausführungsvariante erhöhten Bezugszeichen bezeichnet. Der Filtereinsatz 350 weist einen Stützkäfig 352 auf, der derart gestaltet ist, dass über die Höhe des Filtereinsatzes 350 verteilt wiederum vier höhenversetzt übereinander angeordnete Gruppen 353A, 353B, 353C, 353D von schlitzartigen Fenstern 353 entstehen. Zwei benachbarte Fenster 353 einer Gruppe 353A werden jeweils durch zueinander parallele Stege 354 voneinander getrennt. Bezogen auf beispielsweise die Gruppe 353A wechseln sich mithin über den Umfang verteilt immer Fenster 353 und Steg 354 ab. Bei der beispielsweise zur Gruppe 353A höhenversetzt liegenden benachbarten Gruppe 353B wechseln sich ebenfalls Fenster 353 und Stege 354 ab, wobei die Anordnung der Stege 354 in dieser benachbarten Gruppe derart getroffen ist, dass jeweils ein Steg 354 der Gruppe 353B in axialer Verlängerung eines Fensters 353 der benachbarten Gruppen 353A und 353C liegt, und umgekehrt. Dies gilt im gezeigten Ausführungsbeispiel für sämtliche Gruppen.

Der Stützkäfig 352 und die vier Gruppen 353A bis 353D werden mittels nur drei unterschiedlichen Einzelteilen gebildet, nämlich zwei zueinander gleich aufgebauten Stirndeckeln 391 sowie hier insgesamt acht zueinander identischen Stegelementen 393, wobei jeweils zwei Stegelemente 393 zu einem Paar zusammengesetzt sind, indem sie um 180° versetzt zueinander zusammengefügt werden, wie Figur 15 gut erkennen lässt, um als Stegelementpaar eine der Gruppen 353A bis 353D mit innerhalb der Gruppe durchgehenden Fenstern 353 und Stegen 354 zu bilden. Jedes Stegelement 393 wiederum besteht, wie insbesondere gut aus den Figuren 13 und 14 ersichtlich ist, aus Kunststoff mit einem Basisring 394, an dem die einzelnen Stege 354 derart integral angeformt sind, das zwischen zwei Stegen 354 jeweils ein Fenster 353 ausgebildet ist. Die eine der beiden in Axialrichtung weisenden Stirnseiten 381, die in Figur 13 nach oben weist, ist abwechselnd in Radialrichtung innenliegend der Stege 354 mit einem Arretierzapfen 382 und jeweils zwischen zwei Arretierzapfen 382 mit einem Arretierloch 383 versehen. Die Stege 354 wiederum sind, wie Figur 14 gut erkennen lässt, an ihren freien Stegenden abwechselnd mit Arretierzapfen 397 und Arretierlöchern 398 versehen, die im Montagezustand zweier Stegelementen 393, wie beispielsweise aus den Figuren 12 und 15 verständlich wird, bezogen auf dieselbe Gruppe mit den Stegenden 354 des zweiten Stegelementes 393 zusammenwirken, während zwischen benachbarten Gruppen jeweils die Arretierlöchern 383 und Arretierzapfen 382 am Basisring 394 zusammenwirken und ineinander einfassen. Die Arretierlöcher 383 und Arretierzapfen 382 am Basisring 394 jeweils der Stegelemente 393 der äußersten Gruppen 393A, 393D wirken ferner auch mit entsprechenden Zapfen und Löchern an den Stirndeckeln 391 zusammen.

Wie die Figuren 13 bis 16 ferner gut erkennen lassen, erstreckt sich jeder Steg 354 mit einer Stegfront 385 jeweils radial außerhalb des Basisrings 394. Sämtliche Stege 354 erstrecken sich radial bzw. in Radialrichtung und sie sind symmetrisch zu einer Radialebene ausgebildet, welche das Zentrum des Stützkäfigs 352 schneidet. Jede Stegfront 385 wiederum verjüngt sich zur freien Stirnfront 386 der Stege 354 und ist als Stegspitze ausgebildet, wobei die Stirnfront 386 gerundet ist. Zugleich erstreckt sich jede Stegfront 385 in Axialrichtung gegenüber dem Basisring 394 sowohl nach oben als auch nach unten, wobei die Axiallänge des Stegs 354 bzw. der Stegfront 385, die über die mit den Arretierzapfen 382 bzw. Arretierlöchern 383 versehene Stirnseite 381 des Basisrings 394 in Axialrichtung vorkragt, deutlich kürzer ist als auf der gegenüberliegenden Seite des Basisrings 394, und im Wesentlichen der Dicke des Basisrings 394 in Axialrichtung entspricht. Dies führt dazu, dass im Montagezustand, wie Figur 15 zeigt, sich der Steg 354 der Gruppe 353B immer bis an ein Fenster 353 der benachbarten Gruppen 353A oder 353C heran erstreckt und dieses begrenzt.

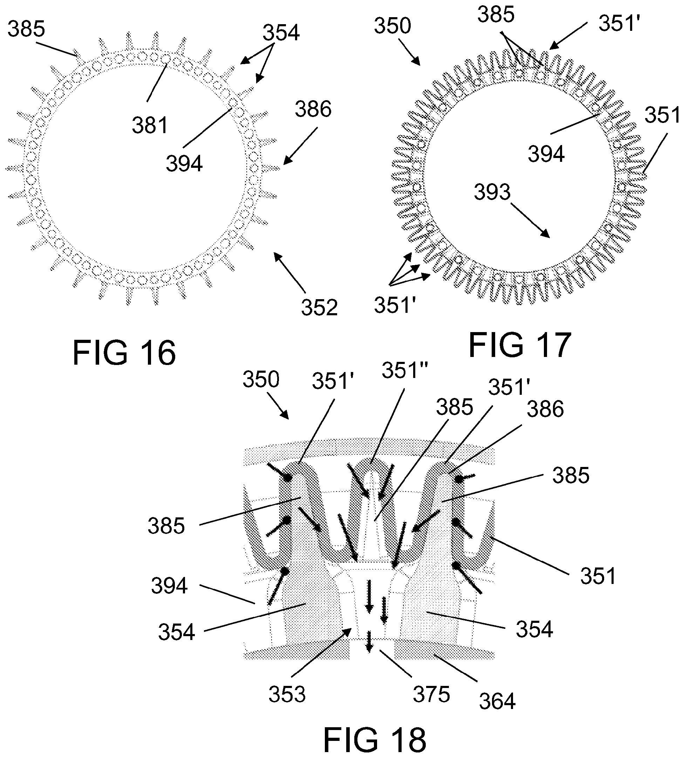

Die Ausgestaltung des Stützkäfigs 352 hat besondere Vorteile bei der Verwendung eines plissierten Filtermittels. Die Figur 17 zeigt den Filtereinsatz 350 in einer Ansicht entsprechend Figur 16 mit bereits mittels des Stützkäfigs 352 abgestütztem Filtermittel 351. Das Filtermittel 351 weist eine Vielzahl von Plissierungsfalten 351' auf, wobei gezeigten Ausführungsbeispiel die Anzahl der Plissierungsfalten 351' doppelt so groß ist wie die Anzahl von Stegen 354 eines Stegelementes 393. Jeder Steg 354 taucht hierbei vollständig mit seiner über den Basisring 394 radial nach außen über diesen überstehenden Stegfront 385 in eine der Plissierungsfalten 351' ein und füllt diese Plissierungsfalte 351' an der Innenseite des Filtermittels 351 weitestgehend oder vollständig aus. Aufgrund der wechselnden Anordnung von Fenstern 353 und Stegen 354 zwischen zwei benachbarten Gruppen wird jeweils die Plissierungsfalte 351', die in einer bestimmten Gruppe nicht mittels der Stegfronten 385 der Stege 354 abgestützt wird, dann jedoch in der benachbarten Gruppe von dem dort befindlichen Steg abgestützt, der hierzu in die Plissierungsfalte 351' eintaucht.

Die sich aufgrund der Gestaltung des Filtereinsatzes 350 ergebende Strömungssituation im Rückspülzyklus ist in Figur 18 angedeutet. Die Schnittansicht in Figur 18 ist derart gelegt, dass der Schnitt durch die Fenster 353 und Stege 354 einer Gruppe gelegt ist, wobei die Stege 354 mit ihren geschnitten dargestellten Stegfronten 385 jeweils in zwei Plissierungsfalten 351' eintauchen, während vor dem Fenster 353 dieser Gruppe eine weitere Plissierungsfalte 351" liegt, die im Bereich dieser Gruppe nicht mittels eines Steges abgestützt ist, jedoch im Bereich der benachbarten Gruppe bzw. Gruppen mittels der Stegfront 385 befindlichen Stegs 354 abgestützt wird.

Wenn nun über den Spülspalt 375 der nur schematisch in Figur 18 noch angedeuteten Spülkammer 364 eine Rückspülung des Fensters 353 stattfindet, wird das Filtermittel 351 im Bereich der dem Spülzyklus unterliegenden Gruppe an die Außenflanke der in die Plissierungsfalten 351' eintauchenden und als Stegspitzen ausgebildeten Stegfronten 385 herangezogen, wie mit den runden Strichköpfen angedeutet, wodurch eine Bypassströmung über benachbarte Plissierungsfalten 351' effektiv unterbunden wird und nur die unmittelbar vor dem Fenster 353 befindliche Plissierungsfalte 351" dem Rückspülprozess, wie mit den Pfeilen angedeutet, unterzogen wird. Zugleich verhindern die Stege 354 bzw. Stegfronten 385 im Bereich der benachbarten Gruppen eine Blind- oder Bypassströmung von oben oder unten, da auch dort die Plissierungsfalte 351" mit einer Stegspitze abgestützt wird. Jede Stegfront 385 fasst bzw. taucht mit ihrer Stegspitze vollständig in die vor ihr liegende Plissierungsfalte 351' ein und erstreckt sich über die gesamte Tiefe der Plissierungsfalte 351' bis zum Faltengrund der jeweiligen Plissierungsfalte. Über die gerundete Stirnfront 386 ist die Stegspitze bzw. Stegfront 385 an die Kontur der Plissierungsfalte 351' angepasst. Zwischen zwei Stegfronten 385 bzw. Stegen 354 kann sich das Filtermaterial mit seinen Plissierungsfalten zusätzlich noch an der Außenwandung des Basisrings 394 anlegen und dort eine weitere Stütze finden.

Für den Fachmann ergeben sich aus der vorherigen Beschreibung zahlreiche Modifikationen, die in den Schutzbereich der anhängenden Ansprüche fallen sollen. Das Filtermittel kann ein- oder mehrlagig sein. Die Anzahl der Fenster, der Winkelversatz der Radialauslässe und damit die notwendige begrenzte Drehbeweglichkeit zwischen Hohlwelle und Spülkammern können variieren. Der Stützkäfig kann auch ohne Zwischenring ausgebildet sein und beispielweise zwei Stegelemente enthalten, die zwischen zwei Stirndeckeln angeordnet sind. Durch Übereinanderstapeln mehrerer wie vorstehend beschrieben ausgebildeter Stützkäfigelemente kann dann eine Anpassung an unterschiedliche Filterflächen und Baulängen des Filtereinsatzes und der Rückspülvorrichtung erfolgen. Die Anordnung eines plissierten Filtergewebes derart, dass jeweils die innenliegende Falte gegen die Außenseite eines Steges stößt oder in jede Falte zumindest partiell ein Steg eintaucht, bildet die bevorzugte Ausgestaltung. Die Funktionsweise wird jedoch allenfalls verschlechtert, sofern die Anzahl von Falten und Stegen unterschiedlich ist beziehungsweise die Positionierung von Falte und Steg nicht exakt eingehalten wird. So können insbesondere mehr Plissierungsfalten vorhanden sein als Stege mit in die Plissierungsfalten eintauchenden Stegfronten. Es könne mithin jeweils zwischen zwei Stegen auch zwei, drei oder mehr Plissierungsfalten vor einem Fenster liegen, wobei nicht alle Plissierungsfalten durch eine Stegfront eines Stegs in der oder den benachbarten Gruppe(n) abgestützt ist. Es wäre auch möglich, die Mitnahmemittel und das Zahnrad drehfest mit den Spülkammern zu koppeln und dann die Hohlwelle als passives Element mitzunehmen. Die Abdichtung des Stützkäfigs und des Filtermittels zwischen den Stirndeckeln kann auf unterschiedliche Weisen erfolgen. Solche und weitere Modifikationen sollen in den Schutzbereich der anhängenden Ansprüche fallen. Ferner stellen die gezeigten Ausführungsbeispiele nur die bevorzugte Ausgestaltungen dar, ohne den Schutzbereich hierauf zu beschränken.

## Patentansprüche

1. Rückspülfilter für flüssige Medien, insbesondere für flüssige Brennstoffe, mit einem einen Filtereinlass, einen Filterauslass und einen Spülanschluss aufweisenden Filtergehäuse, mit einem im Filtergehäuse feststehend angeordneten, von dem zu filternden Medium von innen nach außen durchströmten Filtereinsatz (50; 350), der mittels wenigstens eines mindestens zwei Gruppen von schlitzartigen Fenstern (53) aufweisenden zylindrischen Stützkäfigs (52) und mindestens eines am Stützkäfig (52) abgestützten Filtermittels (51) gebildet ist, wobei die Fenster (53) innerhalb jeder Gruppe (53A, 53B) zueinander parallel ausgerichtet verlaufen und durch zueinander parallele Stege (54) des Stützkäfigs (52) voneinander getrennt sind, und mit einer im Inneren des Filtereinsatzes (50) angeordneten, mittels eines Verstellantriebs (40) im Filtereinsatz um eine Achse (M) rotierbaren, mindestens eine Spaltöffnung (75) aufweisenden und sich über die Höhe des Filtereinsatzes erstreckenden Rückspülvorrichtung (60) zum zonenweisen Freispülen des Filtermittels (51; 351) über Spaltöffnung (75) sowie Fenster (53; 353) und zum Abführen von Filterrückstände zum Spülanschluss während eines Rückspülzyklus, wobei die schlitzartigen Fenster (53) der einen Gruppe (53A) in Umfangsrichtung versetzt gegenüber denjenigen der anderen Gruppe(n) (53B) angeordnet sind und die Fenster (53) der einen Gruppe (53A) in axialer Verlängerung von den Stegen (54; 354) der anderen Gruppe(n) (53B) liegen, **dadurch gekennzeichnet, dass** die Rückspülvorrichtung (60) wenigstens zwei voneinander getrennte, höhenversetzt zueinander angeordnete Spülkammern (64A, 64B) mit zugehöriger Spaltöffnung (75) und eine relativ zu den Spülkammern (64) begrenzt drehbewegliche Hohlwelle (61) aufweist, die im Bereich der ersten Spülkammer (64A) einen ersten Radialauslass (69A) und im Bereich der zweiten Spülkammer (64B) einen zweiten Radialauslass (69B) aufweist, der höhenversetzt und umfangsversetzt zum ersten Radialauslass (69A) an der Hohlwelle angeordnet ist, wobei die Drehrichtung der Rückspülvorrichtung (60) mittels des Verstellantriebs (40) während des Rückspülzyklus umkehrbar ist, und für beide Bewegungsrichtungen Mitnahmemittel (74) zum Mitbewegen von Spülkammern (64) und Hohlwelle (61) in die jeweilige Drehrichtung nach einer Richtungsumkehr und Relativverdrehung zwischen Hohlwelle (61) und Spülkammern (64) vorgesehen sind, um in einer Drehrichtung ein zonenweises Freispülen des Filtermittels über die erste Spülkammer (64A) und ein vor deren Spaltöffung (75) liegendes Fenster (53A) und in der anderen Drehrichtung ein zonenweises Freispülen des Filtermittels über die zweite Spülkammer (64B) und ein vor deren Spaltöffung (75) liegendes Fenster (53B) zu bewirken.

2. Rückspülfilter nach Anspruch 1, **dadurch gekennzeichnet, dass** die Hohlwelle (61) drehfest mit dem Verstellantrieb gekoppelt ist, wobei vorzugsweise die Kopplung über ein Verzahnungsgetriebe erfolgt.

3. Rückspülfilter nach 1 oder 2, **dadurch gekennzeichnet, dass** der Verstellantrieb eine linearverschiebliche Zahnstange (42) umfasst, die mit einem mit der Rückspülvorrichtung gekoppelten Zahnrad (63) zum Drehen der Rückspülvorrichtung kämmt, wobei der Verstellantrieb (40) vorzugsweise aus einem Pneumatik-Linearantrieb besteht.

4. Rückspülfilter nach Anspruch 3, **dadurch gekennzeichnet, dass** dem Schlammablass (6) ein Spülventil (7) zugeordnet ist, das mittels einer Bewegung der Zahnstange (42) öffenbar ist, wobei vorzugsweise die Zahnstange (42) mit einer Nockenfläche als Schaltnocken zum Betätigen des Spülventils (7) versehen ist, wobei vorzugsweise das Spülventil (7) gegen die Rückstellkraft einer Rückstellfeder (9) mittels der Zahnstange (42) während des Rückspülzyklus in eine Öffnungsstellung bewegbar ist.

5. Rückspülfilter nach einem der Ansprüche 1 bis 4, **dadurch gekennzeichnet, dass** die Spülkammern (64) während eines Rückspülzyklus mittels der Verstelleinrichtung in beide Drehrichtungen um wenigstens 360° verdrehbar sind.

6. Rückspülfilter nach einem der Ansprüche 1 bis 5, **dadurch gekennzeichnet, dass** die Spülkammern (64) aus gleichartigen, miteinander lösbar verbundenen Kammermodulen (65) bestehen, wobei jeweils zwei Kammermodule (65) zu einer Doppelkammer zusammengesetzt sind, wobei vorzugsweise sämtliche Kammermodule (65) mittels durchgehender Stangen zu einem Spülkammereinsatz verbunden sind, welcher partiell drehbeweglich an der Hohlwelle (61) gelagert ist.

7. Rückspülfilter nach einem der Ansprüche 1 bis 6, **dadurch gekennzeichnet, dass** der Filtereinsatz (50) mehrere Untergruppen aufweist, wobei jede Untergruppe jeweils eine Gruppe von ersten Fenstern und eine Gruppen von zweiten Fenstern umfasst, und die Hohlwelle genau zwei umfangsversetzt und höhenversetzt positionierte Radialauslässe aufweist, wobei vorzugsweise der erste Radialauslass der/den obersten Untergruppe(n) und der zweite Radialauslass der/den unteren Untergruppe(n) zugeordnet sind.

8. Rückspülfilter nach einem der Ansprüche 1 bis 7, **dadurch gekennzeichnet, dass** das Filtermittel (51) aus einem plissierten, vorzugsweise mehrlagigen Filtergewebe oder Filtertuch besteht, das zwischen dem Stützkäfig (52) und einem vorzugsweise von einem Lochblech gebildeten Stützmantel (55) angeordnet ist, wobei jeder Plissierungsfalte (51') jeweils mehrere Fenster unterschiedlichen Gruppen von ersten Fenstern oder von zweiten Fenster zugeordnet sind.

9. Rückspülfilter nach einem der Ansprüche 1 bis 8, **dadurch gekennzeichnet, dass** das Filtermittel (351) aus einem plissierten, vorzugsweise mehrlagigen Filtergewebe oder Filtertuch mit Plissierungsfalten (351') besteht, wobei sämtliche Stege (354) mit einer Stegfront jeweils in eine Plissierungsfalte (351') einfassen.

10. Rückspülfilter nach Anspruch 9, **dadurch gekennzeichnet, dass** jeder Plissierungsfalte (351') jeweils mehrere Fenster (353) unterschiedlichen Gruppen von ersten Fenstern oder von zweiten Fenster zugeordnet sind, und/oder dass die Stegfront (385) jedes Stegs (354) sich bis zum Faltengrund einer Plissierungsfalte (351') erstreckt.

11. Rückspülfilter nach Anspruch 9 oder 10, , **dadurch gekennzeichnet, dass** sämtliche Stege (354) sich radial erstrecken, und vorzugsweise symmetrisch zu einer Radialebene ausgebildet sind.

12. Rückspülfilter nach einem der Ansprüche 9 bis 11, **dadurch gekennzeichnet, dass** dass die Stegfront (385) jedes Stegs (354) als sich zu ihrer freien Stirnfront (386) verjüngende Stegspitze ausgebildet ist, wobei vorzugsweise die Stirnfront (386) gerundet ist.

13. Rückspülfilter nach einem der Ansprüche 1 bis 8 , **dadurch gekennzeichnet, dass** die Fenster (53) und/oder die Stege (54) jeder Gruppe schräg zu einer Radialebene verlaufen, wobei die Fenster der einen Gruppe und die Fenster der anderen Gruppe um denselben Winkel, aber in entgegengesetzte Richtungen, schräg zur Radialebene stehen.

14. Rückspülfilter nach einem der Ansprüche 1 bis 13, **dadurch gekennzeichnet, dass** der Stützkäfig (52; 352) modulartig aufgebaut ist und mehrere zueinander gleiche, ringförmige Stegelemente (93; 393) aufweist, die zwischen zwei Stirndeckeln (91; 191) eingefasst sind, wobei jedes Stegelement (93; 393) wenigstens einen Basisring (94; 394) aufweist, an dem integral mehrere umfangsversetzt zueinander positionierte Stege (54; 354) angeformt sind, wobei vorzugsweise der Stützkäfig (52; 352) eine geradzahlige Anzahl von Stegelementen (93; 393) aufweist, und/oder wobei jeweils zwei Stegelemente (93; 393) ein Stegelementpaar bilden, die mit ihren Basisringen aneinanderstoßend zwischen den Stirndeckeln einfasst sind.

15. Rückspülfilter nach Anspruch 14, **dadurch gekennzeichnet, dass** die Stege (54) an einer Stirnseite des Basisrings ausgebildet sind und schräg zu einer Radiallinie ausgerichtet sind, wobei mehrere Paare von Stegelementen (93) zwischen den Stirndeckeln angeordnet sind, wobei jeweils zwischen zwei Stegelementpaaren ein Zwischenring (92) angeordnet ist, wobei vorzugsweise die Stege der Stegelemente an ihren freien Stegenden mit integral angeformten Arretierzapfen (97) zum Einfassen in Arretierlöchern (98, 99) in den Stirndeckeln oder Zwischenringen versehen sind.

16. Rückspülfilter nach Anspruch 14 oder 15, **dadurch gekennzeichnet, dass** die Stege (354) der Stegelemente an ihren freien Stegenden abwechselnd mit integral angeformten Arretierzapfen (397) oder Arretierlöcher (398, 399) versehen sind, und der Basisring (394) an einer Stirnseite (381) abwechselnd mit Arretierzapfen (382) und Arretierlöchern (398) versehen ist, die jeweils zusammenwirken, wobei sich die Stegfronten der Stege (354) radial außerhalb des Basisrings (394) erstrecken, wobei vorzugsweise sich die Stegfronten der Stege (354) radial außerhalb des Basisrings (394) erstrecken, wobei die Stegfronten beidseitig nach oben und unten über die Stirnseiten des Basisring (394) vorkragen, wobei die Stegfronten vorzugsweise über die mit den Arretierlöchern versehene Stirnseite des Basisrings entsprechend dessen Dicke in Axialrichtung vorkragen.

17. Rückspülfilter nach einem der Ansprüche 14 bis 16, **dadurch gekennzeichnet, dass** die Stirndeckeln mittels Ankerstangen miteinander verbunden sind, wobei zwischen den Stirndeckeln auch der Stützmantel und das zwischen Stützmantel und Stützkäfig angeordnete, vorzugsweise aus einem plissierten Filtergewebe bestehende Filtermittel eingefasst ist.

## Claims

1. Backflush filter for liquid media, especially for liquid fuels, having a filter housing that has a filter inlet, a filter outlet and a flushing connection, having a filter insert (50; 350), being fixedly arranged in the filter housing, flowable through by the medium to be filtered from the inside to the outside and formed by means of at least one cylindrical supporting cage (52), which has at least two groups of slot-type apertures (53), and at least one filtering means (51) supported on the supporting cage (52), wherein the apertures (53) within each group (53A, 53B) extend in parallel alignment with one another and are separated from one another by mutually parallel ribs (54) of the supporting cage (52), and having a backflushing device (60), which is arranged in the interior of the filter insert (50), is rotatable in the filter insert about an axis (M) by means of an actuating drive (40), has at least one slit (75) and extends over the height of the filter insert, said backflushing device serving for zone-wise flushing of the filtering means (51; 351) via the slit (75) and apertures (53; 353) and for carrying filter residues to the flushing connection during a backflush cycle, wherein the slot-type apertures (53) of one group (53A) are arranged circumferentially offset relative to those of the other group(s) (53B), and the apertures (53) of one group (53A) lie in axial extension of the ribs (54; 354) of the other group(s) (53B), **characterized in that** the backflushing device (60) has at least two mutually separate flushing chambers (64A, 64B), arranged vertically offset relative to one another and having associated slits (75), and a hollow shaft (61), which is capable of limited rotary motion relative to the flushing chambers (64) and has a first radial outlet (69A) in the region of the first flushing chamber (64A) and a second radial outlet (69B) in the region of the second flushing chamber (64B), which second radial outlet is arranged on the hollow shaft in a manner vertically offset and circumferentially offset relative to the first radial outlet (69A), wherein the direction of rotation of the backflushing device (60) is reversable by means of the actuating drive (40) during the backflush cycle, and driving means (74) for simultaneous movement of the flushing chambers (64) and the hollow shaft (61) in the respective direction of rotation after a reversal of direction and for rotation of the hollow shaft (61) and the flushing chambers (64) relative to one another are provided for both directions of motion, in order to effect zone-wise flushing of the filtering means via the first flushing chamber (64A) and a window (53A) located in front of its slit (75) in one direction of rotation and to effect zone-wise flushing of the filterings means via the second flushing chamber (64B) and a window (53B) located in front of its slit (75) in the other direction of rotation.

2. Backflush filter according to Claim 1, **characterized in that** the hollow shaft (61) is coupled for conjoint rotation to the actuating drive, wherein coupling is preferably accomplished by means of a geared mechanism.

3. Backflush filter according to Claim 1 or 2, **characterized in that** the actuating drive comprises a rack (42) capable of linear motion, which meshes with a gearwheel (63) coupled to the backflushing device for rotation of the backflushing device, wherein the actuating drive (40) preferably comprises a pneumatic linear drive.

4. Backflush filter according to Claim 3, **characterized in that** a flushing valve (7), being openable and closable by means of a movement of the rack (42), is assigned to the sludge outlet (6), wherein preferably, the rack (42) is provided with a cam surface as switching cam for actuating the flushing valve (7), wherein the flushing valve (7) preferably is movable into an open position during the backflush cycle by means of the rack (42), counter to the restoring force of a return spring (9).

5. Backflush filter according to one of Claims 1 to 4, **characterized in that** the flushing chambers (64) are rotatable by at least 360° in both directions of rotation by means of the actuating device during a backflush cycle.

6. Backflush filter according to one of Claims 1 to 5, **characterized in that** the flushing chambers (64) consist of chamber modules (65) of the same type, which are connected detachably to one another, wherein two chamber modules (65) in each case are assembled to form a double chamber, wherein all the chamber modules (65) are preferably connected by means of through-rods to form a flushing chamber insert, which is supported with the ability for partial rotary motion on the hollow shaft (61).

7. Backflush filter according to one of Claims 1 to 6, **characterized in that** the filter insert (50) has a plurality of subgroups, wherein each subgroup comprises a group of first apertures and a group of second apertures, and the hollow shaft has precisely two radial outlets positioned in a circumferentially offset and vertically offset manner, wherein the first radial outlet is preferably assigned to the uppermost subgroup(s) and the second radial outlet is preferably assigned to the lower subgroup(s).

8. Backflush filter according to one of Claims 1 to 7, **characterized in that** the filtering means (51) consists of a pleated, preferably multi-ply, filter fabric or filter cloth, being arranged between the supporting cage (52) and a supporting casing (55), preferably formed of a perforated metal sheet, wherein each pleating fold (51') is assigned a plurality of apertures of different groups of first apertures or of second apertures.

9. Backflush filter according to one of Claims 1 to 8, **characterized in that** the filtering means (351) consists of a pleated, preferably multi-ply, filter fabric or filter cloth having pleating folds (351'), and each of the ribs (354) fits by means of a rib front into respective pleating folds (351').

10. Backflush filter according to Claim 9, **characterized in that**, a plurality of apertures of different groups of first apertures or of second apertures are assigned to each pleating fold (351'), and/or that the rib front (385) of each rib (354) extends as far as the fold base of one pleating fold (351').

11. Backflush filter according to any of Claims 9 or 10, **characterized in that** all the ribs (354) extend radially and are preferably formed symmetrically with respect to a radial plane.

12. Backflush filter according to any of Claims 9 to 11, **characterized in that** the rib front (385) of each rib (354) is designed as a rib tip tapering to the free front end (386) thereof, wherein preferably, the front end (396) is rounded.

13. Backflush filter according to any of Claims 1 to 8, **characterized in that** the apertures (53) and/or the ribs (54) of each group run oblique with respect to a radial plane, with the apertures of the one group and the apertures of the other group run inclined to the radial plane by the same angle, but in opposite directions.

14. Backflush filter according to any of Claims 1 to 13, **characterized in that** the supporting cage (52; 352) is of modular construction and has a plurality of mutually identical annular ribbed elements (93; 393), which are enclosed between two end covers (91; 391), wherein each ribbed element (93; 393) has at least one base ring (94; 394), on which a plurality of ribs (54; 354) positioned in a manner circumferentially offset relative to one another are integrally formed, wherein the supporting cage (52; 352) preferably has an even number of ribbed elements (93; 393), and/or two ribbed elements (93; 393) in each case form a ribbed element pair, these being clamped between the end covers with their base rings abutting one another.

15. Backflush filter according to Claims 14, **characterized in that** the ribs (54) are formed on the front side of the base ring (94) and run inclined to a radial line, with several pairs of ribbed elements (93) being arranged between end covers, wherein an intermediate ring (92) is arranged between each pair of ribbed elements, and preferably each rib of the rib elements comprise at their free rib ends integrally formed locking pins (97) for interlocking with locking holes (98, 99) in the end covers or intermediate rings.

16. Backflush filter according to Claims 14 or 15, **characterized in that** the ribs (354) of the ribbed elements (393) are provided alternately at their free rib ends with integrally formed locking pins (397) or locking holes (398, 399), and the base ring (394) is provided alternately on one face (381) with locking pins (382) and locking holes (383), which interact in the assembled state, wherein the rib fronts of the ribs (354) extend radially outside the base ring (394), wherein preferably the rib fronts of the ribs (354) extend radially outside the base ring (394), with the rib fronts projecting on both sides up and down over the front sides of the base ring (394), with the rib fronts preferably projecting outside of the front side of the base ring, being equipped with the locking holes, with a projection corresponding to the thickness of the base ring.

17. Backflush filter according to any of Claims 14 to 16, **characterized in that** the end covers are connected to one another by means of anchor rods, with the supporting cage and the filtering means, being arranged between the supporting cage and the supporting casing and preferably consisting of a pleated filtering means, are also being enclosed between the end covers.

## Revendications

1. Filtre à rétrolavage pour milieux liquides, en particulier pour combustibles liquides, avec un boîtier de filtre présentant une entrée de filtre, une sortie de filtre et un raccord de lavage, avec un élément filtrant (50 ; 350) agencé fixe dans le boîtier de filtre, traversé par le milieu à filtrer de l'intérieur vers l'extérieur, qui est formé au moyen d'au moins une cage d'appui cylindrique (52) présentant au moins deux groupes de fenêtres de type fente (53) et d'au moins un moyen filtrant (51) s'appuyant sur la cage d'appui (52), dans lequel les fenêtres (53) s'étendent orientées parallèlement l'une à l'autre à l'intérieur de chaque groupe (53A, 53B) et sont séparées l'une de l'autre par des entretoises (54) parallèles l'une à l'autre de la cage d'appui (52), et avec un dispositif de rétrolavage (60) agencé à l'intérieur de l'élément filtrant (50), rotatif au moyen d'un entraînement de réglage (40) dans l'élément filtrant autour d'un axe (M), présentant au moins une ouverture en forme de fente (75) et s'étendant sur la hauteur de l'élément filtrant pour le lavage libre par zone du moyen filtrant (51 ; 351) via ouverture en forme de fente (75) ainsi que fenêtres (53 ; 353) et pour l'évacuation de résidus de filtration vers le raccord de lavage pendant un cycle de rétrolavage, dans lequel les fenêtres de type fente (53) de l'un groupe (53A) sont agencées décalées dans la direction circonférentielle par rapport à(aux) l'autre(s) groupe(s) (53B) et les fenêtres(53) de l'un groupe (53A) se trouvent dans le prolongement axial des entretoises (54 ; 354) de(s) l'autre(s) groupe(s) (53B), **caractérisé en ce que** le dispositif de rétrolavage (60) présente au moins deux chambres de lavage (64A, 64B) séparées l'une de l'autre, agencées décalées en hauteur l'une par rapport à l'autre avec ouverture en forme de fente (75) correspondante et un arbre creux (61) mobile en rotation délimité par rapport aux chambres de lavage (64), qui présente dans la zone de la première chambre de lavage (64A) une première sortie radiale (69A) et dans la zone de la deuxième chambre de lavage (64B) une deuxième sortie radiale (69B), qui est agencée décalée en hauteur et décalée circonférentiellement par rapport à la première sortie radiale (69A) au niveau de l'arbre creux, dans lequel le sens de rotation du dispositif de rétrolavage (60) est réversible au moyen de l'entraînement de réglage (40) pendant le cycle de rétrolavage, et des moyens d'entraînement (74) pour emmener les chambres de lavage (64) et l'arbre creux (61) dans le sens de rotation respectif après une inversion du sens et une rotation relative entre l'arbre creux (61) et les chambres de lavage (64) sont prévus pour les deux directions de déplacement pour provoquer dans un sens de rotation un lavage libre par zone du moyen filtrant via la première chambre de lavage (64A) et une fenêtre (53A) située devant son ouverture en forme de fente (75) et dans l'autre sens de rotation un lavage libre par zone du moyen filtrant via la deuxième chambre de lavage (64B) et une fenêtre (53B) située devant son ouverture en forme de fente (75).

2. Filtre à rétrolavage selon la revendication 1, **caractérisé en ce que** l'arbre creux (61) est couplé solidaire en rotation avec l'entraînement de réglage, dans lequel le couplage a lieu de préférence par le biais d'une transmission à denture.

3. Filtre à rétrolavage selon 1 ou 2, **caractérisé en ce que** l'entraînement de réglage comprend une crémaillère (42) à déplacement linéaire, qui s'engrène avec une roue dentée (63) couplée avec le dispositif de rétrolavage pour la rotation du dispositif de rétrolavage, dans lequel l'entraînement de réglage (40) se compose de préférence d'un entraînement linéaire pneumatique.

4. Filtre à rétrolavage selon la revendication 3, **caractérisé en ce qu'**une vanne de lavage (7), qui peut être ouverte au moyen d'un mouvement de la crémaillère (42), est associée à l'évacuation de boue (6), dans lequel la crémaillère (42) est dotée de préférence d'une surface de came en tant que came de commutation pour l'actionnement de la vanne de lavage (7), dans lequel la vanne de lavage (7) est déplaçable de préférence contre la force de rappel d'un ressort de rappel (9) au moyen de la crémaillère (42) pendant le cycle de rétrolavage dans une position d'ouverture.

5. Filtre à rétrolavage selon l'une quelconque des revendications 1 à 4, **caractérisé en ce que** les chambres de lavage (64) peuvent tourner d'au moins 360° dans les deux sens de rotation pendant un cycle de rétrolavage au moyen du dispositif de réglage.

6. Filtre à rétrolavage selon l'une quelconque des revendications 1 à 5, **caractérisé en ce que** les chambres de lavage (64) se composent de modules de chambre (65) similaires, reliés l'un à l'autre de manière amovible, dans lequel respectivement deux modules de chambre (65) sont regroupés en une double chambre, dans lequel de préférence tous les modules de chambre (65) sont reliés au moyen de tiges continues en un insert de chambre de lavage, lequel est logé partiellement mobile en rotation au niveau de l'arbre creux (61).

7. Filtre à rétrolavage selon l'une quelconque des revendications 1 à 6, **caractérisé en ce que** l'élément filtrant (50) présente plusieurs sous-groupes, dans lequel chaque sous-groupe comprend respectivement un groupe de premières fenêtres et un groupes de deuxièmes fenêtres, et l'arbre creux présente exactement deux sorties radiales positionnées décalées circonférentiellement et décalées en hauteur, dans lequel de préférence la première sortie radiale est associée au(x) sous-groupe(s) supérieur(s) et la deuxième sortie radiale est associée au(x) sous-groupe(s) inférieur(s).

8. Filtre à rétrolavage selon l'une quelconque des revendications 1 à 7, **caractérisé en ce que** le moyen filtrant (51) se compose d'un tissu filtrant ou toile filtrante plissé, de préférence à plusieurs couches, qui est agencé entre la cage d'appui (52) et une enveloppe d'appui (55) formée de préférence par une tôle perforée, dans lequel respectivement plusieurs fenêtres de différents groupes de premières fenêtres ou de deuxièmes fenêtres sont associées à chaque pli de plissage (51').

9. Filtre à rétrolavage selon l'une quelconque des revendications 1 à 8, **caractérisé en ce que** le moyen filtrant (351) se compose d'un tissu filtrant ou toile filtrante plissé, de préférence à plusieurs couches, avec des plis de plissage (351'), dans lequel toutes les entretoises (354) avec un front d'entretoise s'insèrent respectivement dans un pli de plissage (351').

10. Filtre à rétrolavage selon la revendication 9, **caractérisé en ce que** respectivement plusieurs fenêtres (353) de différents groupes de premières fenêtres ou de deuxièmes fenêtres sont associées à chaque pli de plissage (351'), et/ou que le front d'entretoise (385) de chaque entretoise (354) s'étend jusqu'au fond de pli d'un pli de plissage (351').

11. Filtre à rétrolavage selon la revendication 9 ou 10, **caractérisé en ce que** toutes les entretoises (354) s'étendent radialement et sont réalisées de préférence symétriquement par rapport à un plan radial.

12. Filtre à rétrolavage selon l'une quelconque des revendications 9 à 11, **caractérisé en ce que** le front d'entretoise (385) de chaque entretoise (354) est réalisé en tant que pointe d'entretoise s'effilant vers son front avant libre (386), dans lequel le front avant (386) est de préférence arrondi.

13. Filtre à rétrolavage selon l'une quelconque des revendications 1 à 8, **caractérisé en ce que** les fenêtres (53) et/ou les entretoises (54) de chaque groupe s'étendent en biais par rapport à un plan radial, dans lequel les fenêtres de l'un groupe et les fenêtres de l'autre groupe sont en biais par rapport au plan radial, du même angle, mais de préférence dans des directions opposées.

14. Filtre à rétrolavage selon l'une quelconque des revendications 1 à 13, **caractérisé en ce que** la cage d'appui (52 ; 352) est construite de manière modulaire et présente plusieurs éléments d'entretoise (93 ; 393) annulaires, identiques l'un par rapport à l'autre, qui sont insérés entre deux couvercles frontaux (91 ; 191), dans lequel chaque élément d'entretoise (93 ; 393) présente au moins un anneau de base (94 ; 394), sur lequel plusieurs entretoises (54 ; 354) positionnées décalées circonférentiellement l'une par rapport à l'autre sont moulées d'un seul tenant, dans lequel de préférence la cage d'appui (52 ; 352) présente un nombre pair d'éléments d'entretoise (93 ; 393), et/ou dans lequel respectivement deux éléments d'entretoise (93 ; 393) forment une paire d'éléments d'entretoise, qui sont insérés avec leurs anneaux de base de manière jointive entre les couvercles frontaux.

15. Filtre à rétrolavage selon la revendication 14, **caractérisé en ce que** les entretoises (54) sont réalisées au niveau d'un côté frontal de l'anneau de base et sont orientées en biais par rapport à une ligne radiale, dans lequel plusieurs paires d'éléments d'entretoise (93) sont agencées entre les couvercles frontaux, dans lequel un anneau intermédiaire (92) est agencé respectivement entre deux paires d'éléments d'entretoise, dans lequel les entretoises des éléments d'entretoise sont dotées de préférence au niveau de leurs extrémités d'entretoise libres de tenons d'arrêt (97) moulés d'un seul tenant pour l'insertion dans des trous d'arrêt (98, 99) dans les couvercles frontaux ou anneaux intermédiaires.

16. Filtre à rétrolavage selon la revendication 14 ou 15, **caractérisé en ce que** les entretoises (354) des éléments d'entretoise sont dotées au niveau des leurs extrémités d'entretoise libres tour à tour de tenons d'arrêt (397) moulés d'un seul tenant ou de trous d'arrêt (398, 399), et l'anneau de base (394) est doté au niveau d'un côté frontal (381) tour à tour de tenons d'arrêt (382) et de trous d'arrêt (398), qui coopèrent respectivement, dans lequel les fronts d'entretoise des entretoises (354) s'étendent radialement à l'extérieur de l'anneau de base (394), dans lequel les fronts d'entretoise des entretoises (354) s'étendent de préférence radialement à l'extérieur de l'anneau de base (394), dans lequel les fronts d'entretoise font saillie des deux côtés vers le haut et le bas des côtés frontaux de l'anneau de base (394), dans lequel les fronts d'entretoise font saillie de préférence du côté frontal doté des trous d'arrêt de l'anneau de base en fonction de son épaisseur dans la direction axiale.

17. Filtre à rétrolavage selon l'une quelconque des revendications 14 à 16, **caractérisé en ce que** les couvercles frontaux sont reliés l'un à l'autre au moyen de tiges d'ancrage, dans lequel l'enveloppe d'appui et le moyen filtrant agencé entre l'enveloppe d'appui et la cage d'appui, se composant de préférence d'un tissu filtrant plissé sont également insérés entre les couvercles frontaux.
